# EUROPEAN PATENT APPLICATION

(11) **EP 4 550 471 A1**
(43) Date of publication of application: **07.05.2025**
(21) Application number: 23887839.1
(22) Date of filing: 31.10.2023
(51) Int. Cl.: H01M 4/58, B82Y 40/00, H01M 10/0525, C01B 25/45

(54) **PHOSPHATE MATERIALS HAVING NANO POROUS STRUCTURE, PREPARATION METHOD THEREFOR AND USE THEREOF**

(30) Priority: 11.11.2022 CN 202211409182
(71) Applicant: Knowlitech Co., Ltd., Zhejiang 312074 (CN)
(72) Inventor: MIAO, Jinguo, Shaoxing, Zhejiang 312074 (CN); LI, Weihong, Shaoxing, Zhejiang 312074 (CN); LI, Xu, Shaoxing, Zhejiang 312074 (CN); XU, Huanyu, Shaoxing, Zhejiang 312074 (CN); HAN, Shaojie, Shaoxing, Zhejiang 312074 (CN); DONG, Houcai, Shaoxing, Zhejiang 312074 (CN)
(74) Representative: De Vries & Metman
(86) International application number: PCT/CN2023/127997
(87) International publication number: WO 2024/099149

(57) **Abstract**

Provided are a phosphate material with a nanoporous structure, a preparation method therefor and a use thereof. The manganese iron phosphate has a chemical formula of Mn₁₋ₓFeₓPO₄ (0.01≤x≤0.99). The manganese iron phosphate has a particle size of at most 50 nm and has a porous structure. Also provided is a phosphate material having a general chemical formula of Mn_{1-a-b}FeₐM_{b}PO₄, wherein M is one or more selected from the group consisting of Mg, Ti, V, Cr, Co, Ni, Zn, Ga, Al, Zr, Nb, Mo, Sn, Sb, Ca, Ba, Sr, B, Ru, Si, Te, Nb, Cu and Li, and preferably a combination of five or more of the elements, 0.01≤a≤0.98, 10⁻⁴≤b≤10⁻², and the phosphate material has a particle size of at least 50 nm and also has a porous structure. The material can be used for preparing a manganese iron phosphate battery cathode material, and the specific capacity, rate performance and cycle performance of the obtained anode material are improved.

## Description

### Technical Field

The present disclosure relates to a phosphate material with nanoporous structure, a preparation method therefor and a use thereof.

### Background

In recent decades, nanomaterials and porous materials are functional materials with special structures. They have played a unique role in many application fields such as photocatalysis, solar cells, electromagnetism, optics, etc., with remarkable value and have attracted the attention of scientific researchers. Manganese iron phosphate materials can be used as phosphating agents to prevent rust and corrosion of steel products. They can also be used as ion exchangers, sensors, adsorbents, magnetic materials, etc., and are very important non-metallic inorganic materials. In addition, manganese iron phosphate can also be used as an important precursor material for manganese iron phosphate cathode materials in lithium-ion batteries. Since manganese and iron are homogeneously mixed at the atomic level in manganese iron phosphate materials. When the manganese iron phosphate materials are used to prepare manganese iron phosphate cathode materials, manganese iron metal elements in the cathode materials are also homogeneously distributed at the atomic level, which is beneficial to improving the rate performance and cycle stability of manganese iron phosphate lithium-ion batteries and ameliorating voltage drop and manganese dissolution.

At present, there are not many reports on the preparation of manganese iron phosphate, and even fewer reports on nanoporous manganese iron phosphate. Chinese patent CN111908442A discloses a manganese iron phosphate and a preparation method therefor. The method comprises: using manganese dioxide, ferrous oxalate and phosphoric acid to react in the presence of a reducing agent to obtain (Mn₁₋ₓFeₓ)ₐPO₄·H₂O crystals, and then carrying out filtering, washing and high-temperature sintering to obtain amorphous (Mn₁₋ₓFeₓ)ₐPO₄ powder with a particle size of about 2 um. The method requires the introduction of a reducing agent during the preparation process, and heating is required during the reaction process; the prepared manganese iron phosphate material has a non-porous structure with a large particle size of micron level and high particle density.

There are also some reports on the preparation of manganese phosphate in the prior art, and the methods used include oxidation-precipitation method, reduction-precipitation method, hydrothermal method, etc. However, the manganese phosphate particles prepared by these methods are micron-sized and too large; and the product solution contains more metal ions, so the purity is not high. In addition, when a method for preparing manganese phosphate is used to prepare a manganese iron phosphate material, a pure manganese iron phosphate product may not be obtained, and it is very likely to obtain a mixture of manganese phosphate and iron phosphate.

### Summary of the Invention

In view of the shortcomings and deficiencies of the prior art, the present disclosure provides a phosphate material with a nanoporous structure. The particle size of the phosphate material is small, at the nanometer level, and the particles are porous. When used as a precursor of a cathode material for a manganese iron phosphate-based battery, the phosphate material can increase the specific capacity of the cathode material and improve the rate performance and cycle performance of the battery.

The present disclosure also provides a method for preparing a phosphate material with a nanoporous structure. The preparation method needs mild reaction conditions without use of a reducing agent and a soluble manganese salt and can obtain a high-purity phosphate material.

To achieve the above objective, the technical solution adopted by the present disclosure is as follows:

A manganese iron phosphate, having a chemical formula of Mn₁₋ₓFeₓPO₄, wherein 0.01≤x≤0.99, the manganese iron phosphate having a particle size of at most 50 nm and having a porous structure.

In some embodiments, the particle size of the manganese iron phosphate is at most 40 nm, more preferably 5-40 nm, and more preferably 10-30 nm.

In some embodiments, the manganese iron phosphate has a pore size of 2-10 nm; preferably, the manganese iron phosphate has a pore size of 3-5 nm.

In some embodiments, the manganese iron phosphate has a specific surface area of 10-30 m²/g; preferably, the manganese iron phosphate has a specific surface area of 12-18 m²/g.

In some embodiments, 0.1≤x≤0.9, preferably, 0.2≤x≤0.5, and further preferably, 0.3≤x≤0.4.

In some embodiments, the manganese iron phosphate is monoclinic.

The present disclosure further provides a phosphate material with a chemical formula of Mn_{1-a-b}FeₐM_{b}PO₄, wherein M is one or more selected from the group consisting of Mg, Ti, V, Cr, Co, Ni, Zn, Ga, Al, Zr, Nb, Mo, Sn, Sb, Ca, Ba, Sr, B, Ru, Si, Te, Nb, Cu and Li, and 0.01≤a≤0.98, 10⁻⁴≤b≤10⁻², the phosphate material having a particle size of at most 50 nm and having a porous structure.

In some embodiments, the particle size of the phosphate material is at most 40 nm, more preferably 5-40 nm, and more preferably 10-30 nm.

In some embodiments, the phosphate material has a pore size of 2-10 nm; preferably, the phosphate material has a pore size of 3-5 nm.

In some embodiments, the phosphate material has a specific surface area of 10-30 m²/g; preferably, the manganese iron phosphate has a specific surface area of 12-18 m²/g.

In some embodiments, 0.2≤a≤0.5, 10⁻³≤b≤10⁻².

In some embodiments, the phosphate material is monoclinic.

In some embodiments, M is Co; or, M is Mg and B; or, M is Mo, Nb and B; or, M is Co, V, Ni and B; or, M is Mg; or, M is V and Ti. The phosphate material is a common doped manganese iron phosphate material.

In some embodiments, the phosphate material has a chemical formula of Mn_{1-a-b}FeₐCo_{b}PO₄; or
Mn_{1-a-b}FeₐMg_{b1}B_{b2}PO₄, wherein b1+b2=b; or
Mn_{1-a-b}FeₐMo_{b1}Nb_{b2}B_{b3}PO₄, wherein b1+b2+b3=b;
Mn_{1-a-b}FeₐCo_{b1}V_{b2}Ni_{b3}B_{b4}PO₄, wherein b1+b2+b3+b4=b; or
Mn_{1-a-b}FeₐMg_{b}PO₄; or
Mn_{1-a-b}FeₐV_{b1}Ti_{b2}PO₄, wherein b1+b2=b;
wherein 10⁻⁴≤b1≤10⁻², 10⁻⁴≤b2≤10⁻², 10⁻⁴≤b3≤10⁻², 10⁻⁴≤b4≤10⁻².

In some embodiments, the phosphate material has a chemical formula of Mn_{0.6}Fe_{0.395}CO_{0.005}PO₄ or Mn_{0.65}Fe_{0.344}Mg_{0.005}B_{0.001}PO₄ or Mn_{0.7}Fe_{0.293}Mo_{0.003}Nb_{0.003}B_{0.001}PO₄ or Mn_{0.8}Fe_{0.19}Co_{0.005}Vo_{0.001}Ni_{0.001}B_{0.003}PO₄ or Mn_{0.5}Fe_{0.495}Mg_{0.005}PO₄ or Mn_{0.65}Fe_{0.34}V_{0.005}Ti_{0.005}PO₄.

In some embodiments, M is five or more selected from the group consisting of Mg, Ti, V, Cr, Co, Ni, Zn, Ga, Al, Zr, Nb, Mo, Sn, Sb, Ca, Ba, Sr, B, Ru, Si, Te, Nb, Cu and Li. The phosphate material is a high-entropy doped manganese iron phosphate material.

In some embodiments, the phosphate material has a chemical formula of Mn_{1-a-b}FeₐMg_{b1}V_{b2}Ti_{b3}Cr_{b4}Co_{b5}PO₄, Mn_{1-a-b}FeₐZn_{b1}Cu_{b2}Mg_{b3}Co_{b4}Ti_{b5}PO₄, Mn_{1-a-b}FeₐZn_{b1}Cu_{b2}Mg_{b3}Mo_{b4}Ti_{b5}PO₄, Mn_{1-a-b}FeₐMg_{b1}V_{b2}Ti_{b3}Cr_{b4}Mo_{b5}PO₄, Mn_{1-a-b}FeₐNb_{b1}B_{b2}Co_{b3}V_{b4}Al_{b5}PO₄, Mn_{1-a-b}FeₐCo_{b1}V_{b2}Ni_{b3}B_{b4}Nb_{b5}PO₄, Mn_{1-a-b}FeₐCO_{b1}Ga_{b2}B_{b3}Al_{b4}Sr_{b5}PO₄ or Mn_{1-a-b}FeₐMO_{b1}CO_{b2}Ni_{b3}V_{b4}Ca_{b5}PO₄, wherein b1+b2+b3+b4+b5=b, the ranges of b1-b5 satisfy 10⁻⁴≤b1≤10⁻², 10⁻⁴≤b2≤10⁻², 10⁻⁴≤b3≤10⁻², 10 ⁻⁴≤b4≤10 ⁻², and 10⁻⁴≤b5≤10⁻².

In some embodiments, the phosphate material has a chemical formula of Mn_{0.7}Fe_{0.293}Mg_{0.015}V_{0.001}Ti_{0.0005}Cr_{0.001}CO_{0.003}PO₄, Mn_{0.6}Fe_{0.395}Zn_{0.001}Cu_{0.0005}Mg_{0.001}Co_{0.002} Ti_{0.0005}PO₄, Mn_{0.6}Fe_{0.39}Zn_{0.001}Cu_{0.0005}Mg_{0.005}Mo_{0.003}Ti_{0.0005}PO₄, Mn_{0.7}Fe_{0.293}Mg_{0.0015} V_{0.001}Ti_{0.0005}Cr_{0.001}Mo_{0.003}PO₄, Mn_{0.7}Fe_{0.20}Nb_{0.003}B_{0.003}Co_{0.001}V_{0.002}Al_{0.001}PO₄, Mn_{0.8}Fe_{0.19}Co_{0.005}V_{0.001}Ni_{0.0005}B_{0.003}Nb_{0.0005}PO₄, Mn_{0.5}Fe_{0.49}Co_{0.0025}Ga_{0.0005}B_{0.003}Al_{0.002}Sr_{0.002}PO₄, or Mn_{0.65}Fe_{0.34}Mo_{0.003}Co_{0.003}Ni_{0.002}V_{0.0015}Ca_{0.0005}PO₄.

The present disclosure further provides a method for preparing a phosphate material, the method including the following steps: 1) mixing a manganese iron oxide and an optional compound of an M element with phosphoric acid to obtain a reaction mixture; 2) grinding the reaction mixture and causing the reaction mixture to react to generate a phosphate to obtain a slurry containing the phosphate, wherein the particle size of the phosphate in the slurry is at most 100 nm; 3) separating the slurry to obtain phosphate particles; 4) drying and sintering the phosphate particles to obtain the phosphate material; wherein the M is one or more selected from the group consisting of Mg, Ti, V, Cr, Co, Ni, Zn, Ga, Al, Zr, Nb, Mo, Sn, Sb, Ca, Ba, Sr, B, Ru, Si, Te, Nb, Cu and Li.

In some embodiments, the particle size of the manganese iron oxide is 1-20 µm, preferably, the particle size of the manganese iron oxide is 2-7 µm.

In some embodiments, the phosphoric acid is present in the form of an aqueous solution of phosphoric acid, and the aqueous solution of phosphoric acid has a mass concentration of 10%-70%, preferably 20%-40%.

In some embodiments, the molecular formula of the manganese iron oxide is (MnₓFe_{y})₃O₄, wherein 0.50≤x≤0.81, 0.19≤y≤0.50.

In some embodiments, the molecular formula of the manganese iron oxide is (Mn_{0.60}Fe_{0.40})₃O₄, (Mn_{0.61}Fe_{0.39})₃O₄, (Mn_{0.65}Fe_{0.35})₃O₄, (Mn_{0.70}Fe_{0.30})₃O₄, (Mn_{0.71}Fe_{0.29})₃O₄, (Mn_{0.81}Fe_{0.19})₃O₄, (Mn_{0.50}Fe_{0.50})₃O₄, (Mn_{0.51}Fe_{0.49})₃O₄, or (Mn_{0.66}Fe_{0.34})₃O₄.

In some embodiments, in step 1), the mixing is carried out under mechanical stirring at a temperature of 20-40 °C.

In some embodiments, in step 1), the mixing time is 1-12 h.

In some embodiments, in step 2), the grinding is carried out in a sand mill at a temperature of 20-40 °C.

In some embodiments, in step 2), the grinding time is 0.5-3 h.

In some embodiments, in step 4), the drying temperature is 100-120 °C.

In some embodiments, in step 4), the drying time is 10 h.

In some embodiments, in step 4), the sintering temperature is 300-400 °C.

In some embodiments, in step 4), the sintering time is 1-4 h.

In some embodiments, step 3) includes filtering and washing the phosphate slurry.

In some embodiments, the step 4) includes: drying the phosphate particles to obtain a manganese iron phosphate monohydrate crystal or doped manganese iron phosphate monohydrate crystal with a particle size of at most 100 nm, and then sintering the manganese iron phosphate monohydrate crystal or doped manganese iron phosphate monohydrate crystal to obtain the phosphate material.

In some embodiments, a ratio of the total molar quantity of the manganese iron oxide and the compound of the M element to the molar quantity of the phosphoric acid is 1:1 to 2.

In some embodiments, the preparation method further includes a step of pre-dispersing the manganese iron oxide in an aqueous solution of a dispersant, prior to step 1).

In some embodiments, the dispersant is one or more selected from the group consisting of polyvinyl pyrrolidone, polyethylene glycol and TC130 dispersant.

In some embodiments, the aqueous solution of the dispersant has a mass concentration of 0.01%-5%.

In some embodiments, the preparation method further includes a step of reacting phosphorus pentoxide with water to prepare the phosphoric acid, prior to step 1). That is, the present disclosure may use phosphoric acid or phosphorus pentoxide as a phosphorus source for preparing the phosphate material.

In some embodiments, the compound of the M element is one or more selected from the group consisting of a compound of Mg, a compound of Ti, a compound of V, a compound of Co, a compound of Ni, a compound of Zn, a compound of Ga, a compound of Al, a compound of Zr, a compound of Nb, a compound of Mo, a compound of Sn, a compound of Sb, a compound of Ca, a compound of Ba, a compound of Sr, a compound of B, a compound of Ru, a compound of Si, a compound of Te, a compound of Nb, a compound of Cu, and a compound of Li.

In some embodiments, the compound of the M element is one or more selected from the group consisting of an oxide, carbonate, oxalate, nitrate, sulfate, chloride and organic acid salt of the M element.

In some embodiments, the organic acid salt of the M element is one or more selected from the group consisting of an organic phosphate, acetate, organic sulfonate, alkyl salt and ester salt of other metal elements.

Preferably, the compound of the M element is an oxide, or an acetate or a carbonate.

In some embodiments, the compound of the M element is cobalt chloride; or a combination of magnesium oxide and boric acid, or a combination of molybdenum trioxide, niobium oxalate and boric acid; or a combination of cobalt acetate, ammonium metavanadate, nickel sulfate and boric acid; or magnesium acetate; or a combination of vanadium oxalate and titanium chloride.

In some embodiments, the compound of the M element is a combination of at least five compounds selected from the group consisting of a compound of Mg, a compound of Ti, a compound of V, a compound of Co, a compound of Ni, a compound of Zn, a compound of Ga, a compound of Al, a compound of Zr, a compound of Nb, a compound of Mo, a compound of Sn, a compound of Sb, a compound of Ca, a compound of Ba, a compound of Sr, a compound of B, a compound of Ru, a compound of Si, a compound of Te, a compound of Nb, a compound of Cu, and a compound of Li.

In some embodiments, the compound of the M element is a combination of magnesium acetate, ammonium metavanadate, titanium oxide, cadmium oxide, and cobalt sulfate; or a combination of zinc sulfate, copper oxalate, cobalt acetate, magnesium nitrate, cobalt oxide, and n-butyl titanate; or a combination of zinc oxide, copper oxide, magnesium oxide, molybdenum oxide, and titanium dioxide; or a combination of magnesium oxide, ammonium metavanadate, titanium dioxide, chromium trioxide, and molybdenum oxide; or a combination of niobium oxalate, boron trioxide, cobalt acetate, ammonium metavanadate, and aluminum oxide; or a combination of cobalt acetate, ammonium metavanadate, nickel acetate, boric acid, and niobium oxalate; or a combination of cobalt chloride, gallium chloride, boric acid, aluminum trioxide, and strontium chloride; or a combination of molybdenum oxide, cobalt chloride, nickel chloride, vanadium oxalate, and calcium oxide.

The present disclosure further provides a use of the described manganese iron phosphate or phosphate material or a phosphate material prepared by the described method for preparing a phosphate material in preparation of a battery cathode material.

The present disclosure further provides a manganese iron phosphate battery cathode material, prepared by a high-temperature sintering reaction of raw materials including the described manganese iron phosphate or phosphate material or a phosphate material prepared by the described method for preparing a phosphate material, and a lithium source compound and an optional organic carbon source.

In some embodiments, the lithium source compound is one or more selected from the group consisting of lithium carbonate, lithium hydroxide, lithium chloride, lithium sulfate, lithium nitrate, lithium dihydrogen phosphate, lithium hydrogen phosphate and lithium acetate.

In some embodiments, the organic carbon source is one or more selected from the group consisting of glucose, sucrose, fructose, citric acid, polyethylene glycol, polyvinyl pyrrolidone, ethylenediaminetetraacetic acid and ascorbic acid.

The present disclosure further provides a lithium-ion battery, including a cathode material, wherein the cathode material includes the described manganese iron phosphate cathode material. The lithium-ion battery has excellent cycle performance.

In some embodiments, the lithium-ion battery has a specific discharge capacity of 145 mAh/g or more at 0.1C, a specific discharge capacity of 135 mAh/g or more at 1C, and a capacity retention of 92% or more after 200 cycles of charge and discharge at a 1C.

In some embodiments, the lithium-ion battery has a specific discharge capacity of 145.2 mAh/g or more at 0.1C, a specific discharge capacity of 135.7 mAh/g or more at 1C, and a capacity retention of 92.9% or more after 200 cycles of charge and discharge at a 1C.

In some embodiments, the lithium-ion battery has a discharge capacity of 150 mAh/g or more at 0.1C, a discharge capacity of 140 mAh/g or more at 1C, and a capacity retention of 95.6% or more after 200 cycles of charge and discharge at a 1C.

Compared with the prior art, the present disclosure has the following advantages:

The manganese iron phosphate material or phosphate material of the present disclosure has a particle size of nanometer level, is small in size, and has a porous structure. When a manganese iron phosphate battery cathode material prepared by using the manganese iron phosphate material or the phosphate material as a precursor of the manganese iron phosphate battery cathode material is used in a lithium-ion battery, and the specific capacity, rate performance and cycle performance of the battery can be significantly improved.

### Brief Description of the Drawings

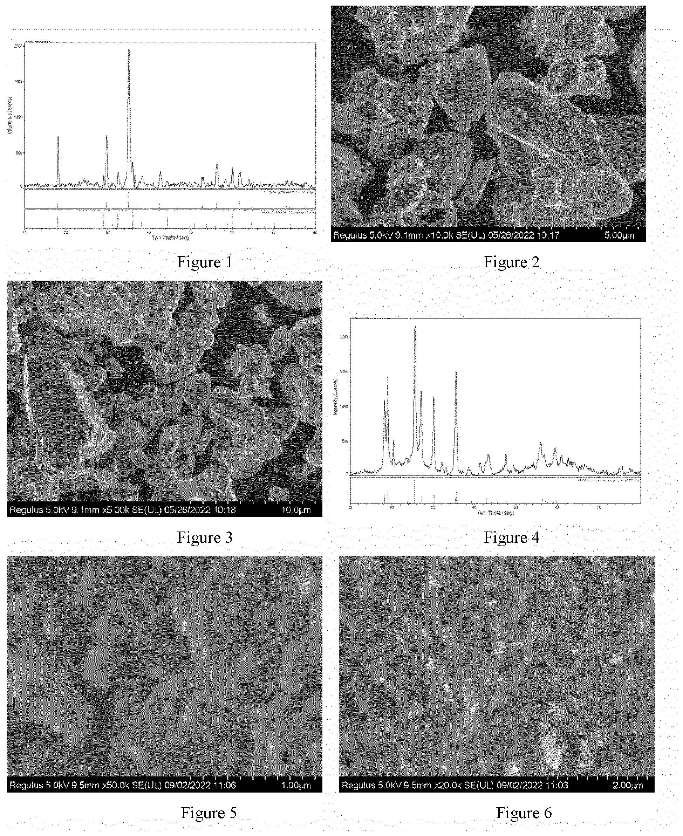

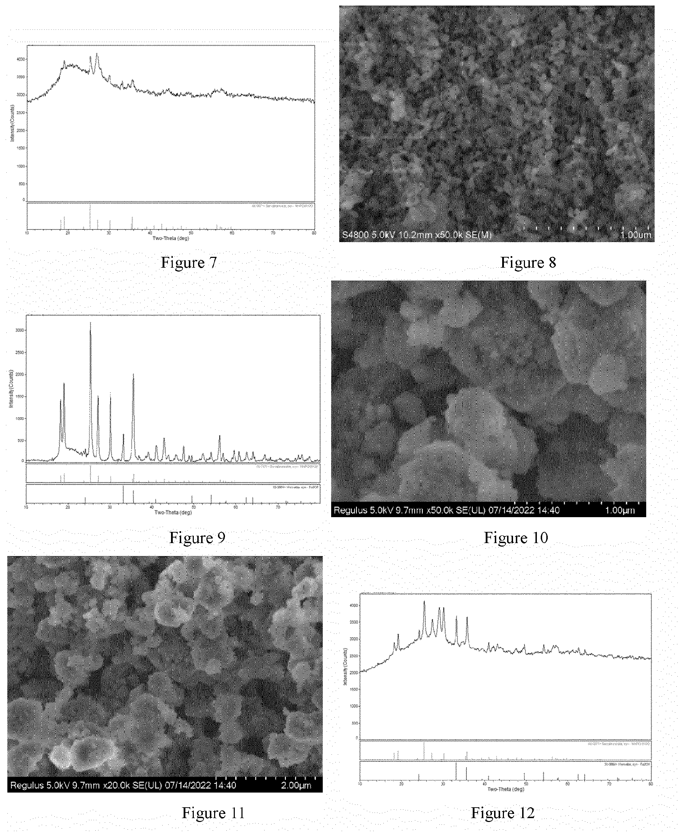

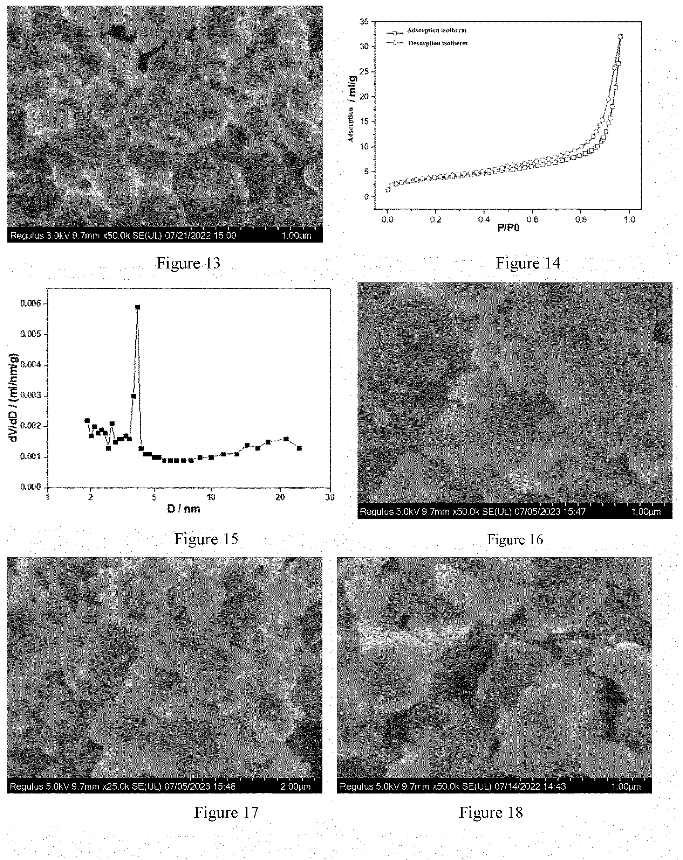

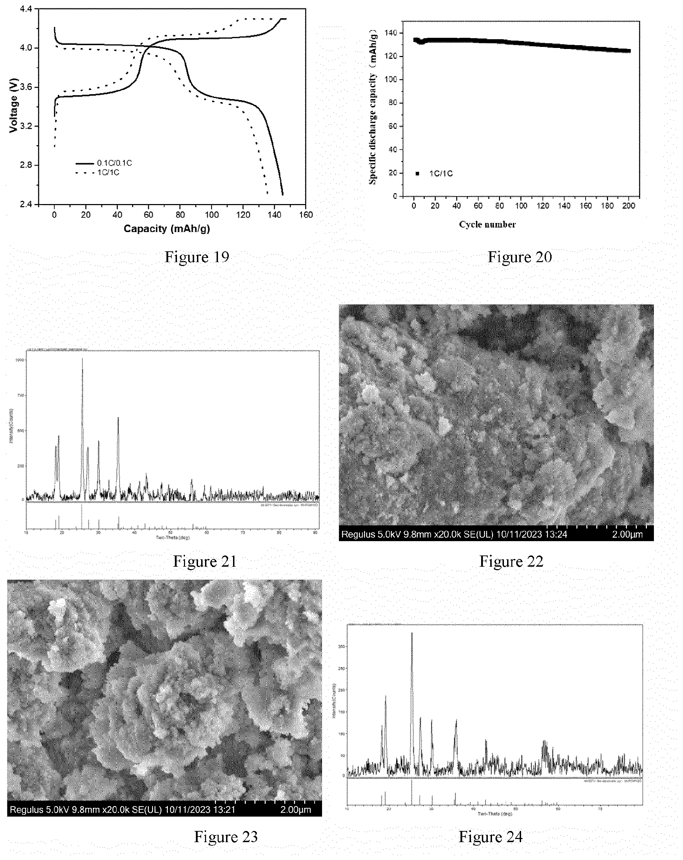

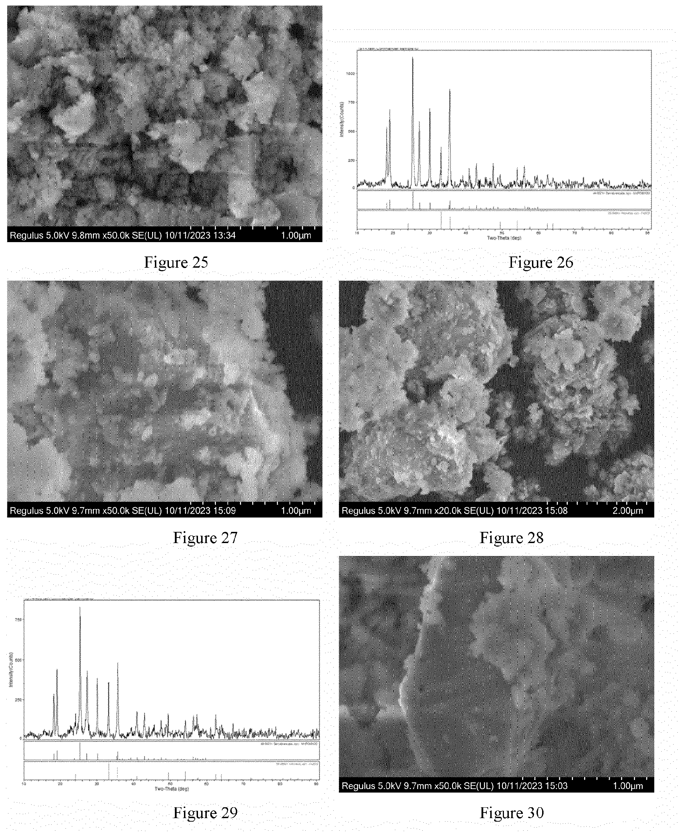

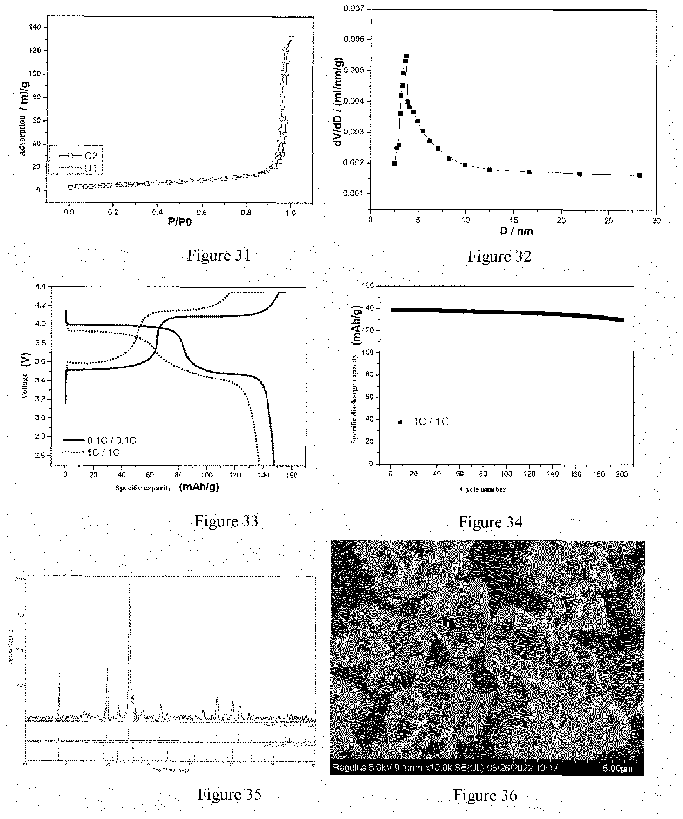

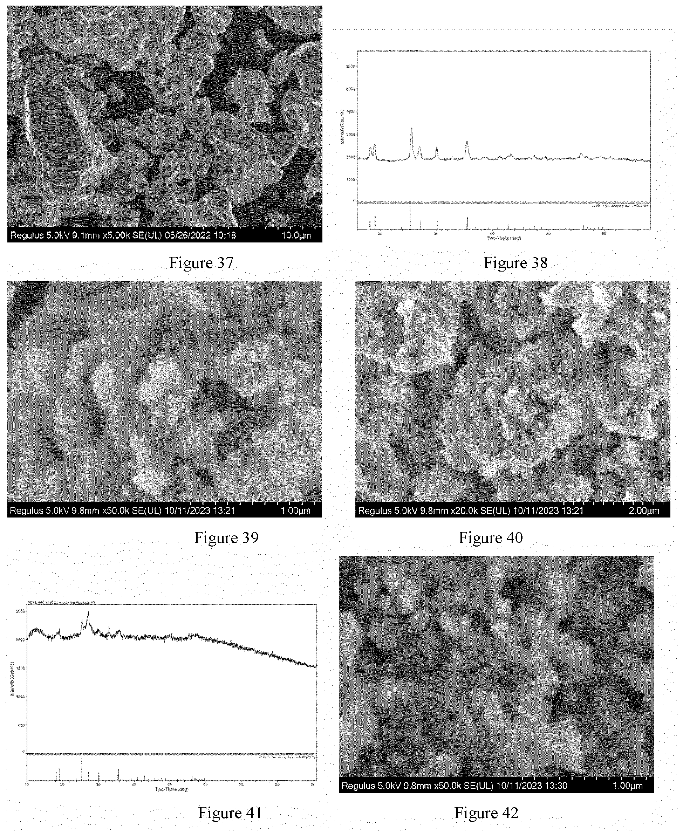

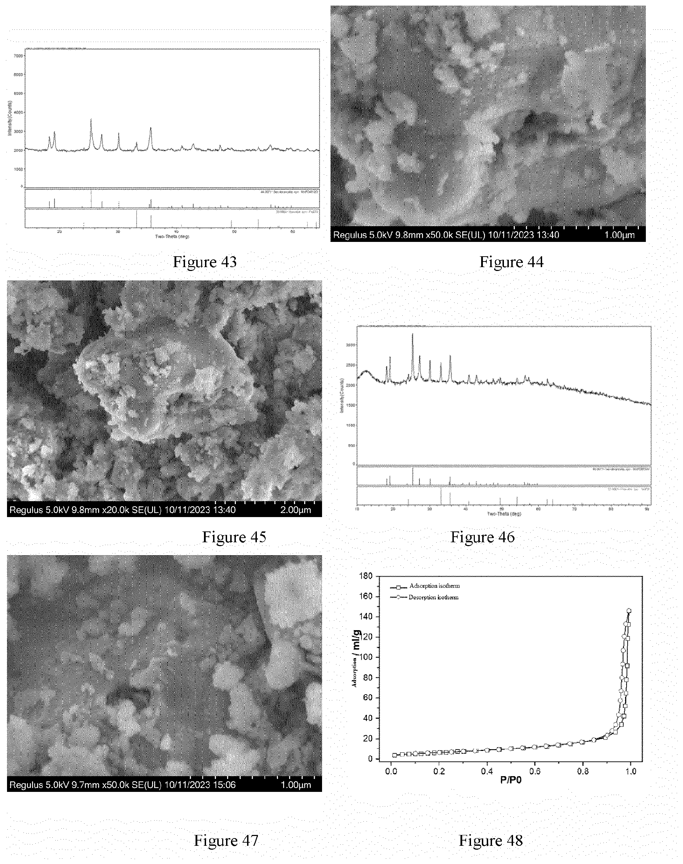

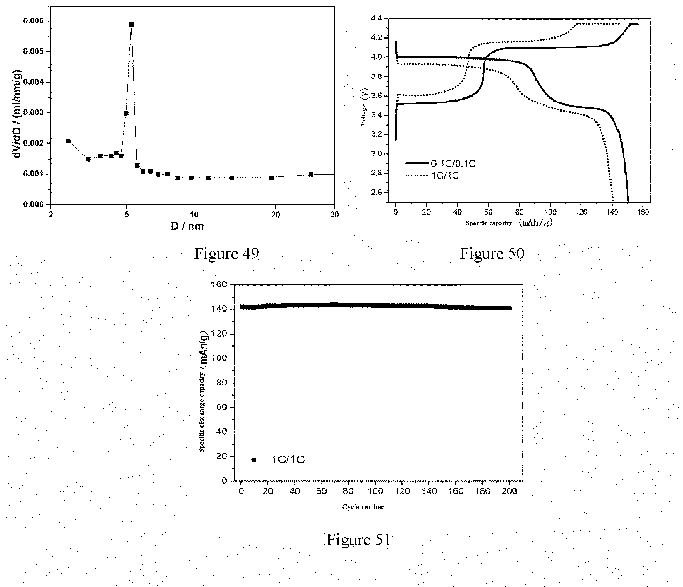

FIG. 1 is an XRD graph of a manganese iron oxide raw material used in Example 1; FIGS. 2-3 are SEM images of the manganese iron oxide raw material used in Example 1, with different scales; FIG. 4 is an XRD graph of a manganese iron phosphate monohydrate in Example 1; FIGS. 5-6 are SEM images of the manganese iron phosphate monohydrate in Example 1, with scales of 1 µm and 2 µm, respectively; FIG. 7 is an XRD graph of a manganese iron phosphate prepared in Example 1; FIG. 8 is an SEM image of the manganese iron phosphate prepared in Example 1; FIG. 9 is an XRD graph of a product of step 2) in Comparative Example 1; FIGS. 10-11 are SEM images of the product of step 2) in Comparative Example 1, with different scales; FIG. 12 is an XRD graph of a final product in Comparative Example 1; FIG. 13 is an SEM image of the final product in Comparative Example 1; FIG. 14 is an adsorption-desorption curve graph of the manganese iron phosphate prepared in Example 1; FIG. 15 is a pore size distribution graph of the manganese iron phosphate prepared in Example 1; FIGS. 16-17 are SEM images of the product of step 2) in Comparative Example 2, with different scales; FIG. 18 is an SEM image of a final product in Comparative Example 2; FIG. 19 shows rate test results of Example 1 used in button batteries; FIG. 20 shows cycle test results of Example 1 used in button batteries; FIG. 21 is an XRD graph of a dopant-modified manganese iron phosphate monohydrate in Example 8; FIGS. 22-23 are SEM images of the dopant-modified manganese iron phosphate monohydrate in Example 8, with scales of 1 µm and 2 µm respectively; FIG. 24 is an XRD graph of a dopant-modified manganese iron phosphate prepared in Example 8; FIG. 25 is an SEM image of the dopant-modified manganese iron phosphate prepared in Example 8; FIG. 26 is an XRD graph of a product of step 2) in Comparative Example 4; FIGS. 27-28 are SEM images of the product of step 2) in Comparative Example 4, with different scales; FIG. 29 is an XRD graph of a final product in Comparative Example 4; FIG. 30 is an SEM image of a final product in Comparative Example 4; FIG. 31 is an adsorption-desorption curve graph of the dopant-modified manganese iron phosphate prepared in Example 8; FIG. 32 is a pore size distribution graph of the dopant-modified manganese iron phosphate prepared in Example 8; FIG. 33 shows rate test results of Example 8 used in button batteries; FIG. 34 shows cycle test results of Example 8 used in button batteries; FIG. 35 is an XRD graph of a manganese iron oxide raw material used in Example 14; FIGS. 36-37 are SEM images of the manganese iron oxide raw material used in Example 14, with different scales; FIG. 38 is an XRD graph of a doped manganese iron phosphate monohydrate in Example 14; FIGS. 39-40 are SEM images of the doped manganese iron phosphate monohydrate in Example 14, with scales of 1 µm and 2 µm respectively; FIG. 41 is an XRD graph of a doped manganese iron phosphate prepared in Example 14; FIG. 42 is an SEM image of the doped manganese iron phosphate prepared in Example 14; FIG. 43 is an XRD graph of a product of step 2) in Comparative Example 6; FIGS. 44-45 are SEM images of the product of step 2) in Comparative Example 6, with different scales; FIG. 46 is an XRD graph of a final product in Comparative Example 6; FIG. 47 is an SEM image of the final product in Comparative Example 6; FIG. 48 is an adsorption-desorption curve graph of the doped manganese iron phosphate prepared in Example 14; FIG. 49 is a pore size distribution graph of the doped manganese iron phosphate prepared in Example 14; FIG. 50 shows rate test results of Example 14 used in button batteries; and FIG. 51 shows cycle test results of Example 14 used in button batteries.

### Detailed Description of Exemplary Embodiments

The present disclosure provides an improved manganese iron phosphate. The product is mainly innovated in that its particle size is controlled to be at most 50 nm and the product has a porous structure. Although the prior art discloses manganese iron phosphates, their particle size is micrometer level, which is large, and the manganese iron phosphate particles in the prior art have high density and are usually non-porous. When the described manganese iron phosphate with a small particle size and a porous structure is used to prepare a manganese iron phosphate cathode material, the specific capacity, charge and discharge rate and cycle performance of a lithium-ion battery including the cathode material can be significantly improved at last.

The present disclosure is also innovated in that a manganese iron phosphate is doped with at least five doping metals to obtain a doped manganese iron phosphate material, and the doped manganese iron phosphate material is then sintered together with a lithium source and an organic carbon source at a high temperature to obtain a high-entropy doped manganese iron phosphate cathode material. The sites of the active manganese and iron elements in the structure of the cathode material are occupied by at least five doped metal elements. The cathode material has a high entropy effect, which is specifically manifested as follows: 1) the material is more stable thermodynamically, because the high-entropy material composed of multiple elements will form a single-phase solid solution, rather than a phase-separated solid solution or a mixture of multiple solid solutions; 2) the electrochemical activity of the material is higher; atoms inside the high-entropy material are randomly distributed in the crystal lattice, the radii and chemical bonds of different metal atoms are quite different, and the environment and position of each atom are different, and for this reason, the lattice distortion and defects inside the lattice are greater than those of traditional mono- or di-phosphate materials, and the material is more active; 3) the material has a hysteresis diffusion effect in kinetics, that is, the internal diffusion and phase change speed of the high-entropy material are very slow; 4) the material has more properties; due to the basic characteristics of different components and their interactions, the high-entropy material shows more complex characteristics. Therefore, under the influence of the high entropy effect, the performance of the high-entropy doped phosphate cathode material is far better than the corresponding performance of cathode materials based on two metal elements such as manganese iron phosphate. Since the high-entropy doped manganese iron phosphate cathode material has a more stable crystal structure, metal ions such as manganese are dissolved more difficultly, thereby improving the cycle performance of the material; and in the presence of multiple active metals and under the synergistic effect between multiple active metals, the cathode material has more electrochemical platforms, and the interconnection between platforms is also smoother, eliminating the phenomenon of a sharp drop at the end of the discharge platform. In addition, since the high-entropy doped manganese iron phosphate cathode material may also have higher electron and ion conduction speeds, lithium-ion batteries using the material have better later rate performance.

The present disclosure is further innovated in the preparation process of the manganese iron phosphate material. In the present disclosure, a manganese iron oxide is directly mixed with phosphoric acid, and the mixture is then ground to accelerate the reaction therebetween to generate a nano-sized phosphate slurry. Particles are then separated from the slurry and dried to obtain nano-sized manganese iron phosphate monohydrate crystals, and the manganese iron phosphate monohydrate crystals are finally sintered to obtain the manganese iron phosphate having a nanoporous structure of the present disclosure. Compared with the prior art, the preparation process does not require a reducing agent or a soluble ferrous salt as a reaction raw material. Instead, the compound manganese iron oxide, which is a compound in which manganese and iron elements are homogeneously mixed at the atomic level, is directly reacted with phosphoric acid to obtain a high-purity manganese iron phosphate, and the process is simple. The described grinding can accelerate the reaction. If grinding is not performed, the reaction between the manganese iron oxide and the phosphoric acid is very slow, the reaction cycle is very long, and it is difficult to achieve complete reaction.

The present disclosure is also innovated in that the dissolution rate of the manganese iron oxide and the nucleation rate of the manganese iron phosphate can be adjusted by changing the concentration of phosphoric acid, thereby regulating the particle size of the manganese iron phosphate crystals. The phosphoric acid may also be prepared by a reaction between phosphorus pentoxide and water, that is, the phosphorus source used for preparing the manganese iron phosphate in the present disclosure may be phosphoric acid or phosphorus pentoxide.

The present disclosure is also innovated in that at least five other compounds doped with metal elements may be mixed with the manganese iron oxide and phosphoric acid, and then subsequent processes may be performed, thereby obtaining the doped manganese iron phosphate material of the present disclosure.

The present disclosure is further described below in conjunction with the embodiments. However, the present disclosure is not limited to the following embodiments. The implementation conditions used in the embodiments can be further adjusted according to the different requirements of specific use. The implementation conditions not specified are conventional conditions in the industry. The technical features involved in various embodiments of the present disclosure can be combined with each other as long as they do not conflict with each other.

### Example 1

This example provides a nanoporous manganese iron phosphate, having a chemical formula of Mn_{0.6}Fe_{0.4}PO₄, and its preparation method is as follows:
1) concentrated phosphoric acid solution and deionized water were placed in a glass beaker in turn and well stirred to obtain an aqueous solution of phosphoric acid with a mass concentration of 35%; according to the molar ratio of ((Mn+Fe)): P element being 1:1.5, 50 g of a micron-sized manganese iron oxide having a molecular formula of (Mn_{0.60}Fe_{0.40})₃O₄ (purchased from Sichuan Qingyuan New Materials Co., Ltd., with an average particle size of 7 µm) was added to 275 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green manganese iron phosphate monohydrate; and
3) the manganese iron phosphate monohydrate was then sintered in a muffle furnace at 400 °C for 2 h to obtain a reddish brown nanoporous manganese iron phosphate.

According to the XRD graph and SEM images of the manganese iron oxide, as shown in FIG. 1 and FIGS. 2-3 respectively, the manganese iron oxide has a crystalline structure. According to the XRD graph and SEM images of the manganese iron phosphate monohydrate obtained in step 2), as shown in FIG. 4 and FIGS. 5-6 respectively, the manganese iron phosphate monohydrate is monoclinic MnPO₄·H₂O. The particle size of the manganese iron phosphate monohydrate was 20 nm, as measured by the scanning electron microscopy (SEM) test method. According to the XRD graph and SEM image of the manganese iron phosphate obtained in step 3), as shown in FIGS. 7 and 8 respectively, the manganese iron phosphate has certain crystallinity, and a large number of porous structures are distributed between the particles. The XRD test shows that the crystal phase still maintains a monoclinic phase structure. The particle size of the manganese iron phosphate is 40 nm as measured by the SEM test method; also, a specific surface area and pore size tester was used to perform adsorption-desorption test and analysis on the manganese iron phosphate. As shown in FIGS. 14 and 15, the manganese iron phosphate material has a mesoporous structure, with a pore size distribution of mainly about 3-5 nm and a specific surface area of about 15 m²/g.

### Example 2

This example provides a nanoporous manganese iron phosphate, having a chemical formula of Mn_{0.85}Fe_{0.15}PO₄, and its preparation method is as follows:
1) concentrated phosphoric acid solution and deionized water were placed in a glass beaker in turn and well stirred to obtain an aqueous solution of phosphoric acid with a mass concentration of 70%; polyvinyl pyrrolidone and deionized water were placed in another glass beaker in turn and well stirred to obtain an aqueous solution of polyvinyl pyrrolidone with a mass concentration of 0.1%; according to the molar ratio of ((Mn+Fe)): P element being 1:1.5, 76.4 g of a micron-sized manganese iron oxide having a molecular formula of (Mn_{0.85}Fe_{0.15})₃O₄ (purchased from Sichuan Qingyuan New Materials Co., Ltd., with an average particle size of 7 µm) was added to 280 mL of the aqueous solution of polyvinyl pyrrolidone, and a resulting solution was then mechanically stirred for 30 min to obtain a black aqueous suspension; 210 g of the aqueous solution of phosphoric acid was then completely added to the black aqueous suspension slowly and a resulting solution was mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green manganese iron phosphate monohydrate; and
3) the manganese iron phosphate monohydrate was then sintered in a muffle furnace at 400 °C for 2 h to obtain a reddish brown nanoporous manganese iron phosphate.

After testing and analysis, the obtained manganese iron phosphate monohydrate is monoclinic MnPO₄·H₂O with a particle size of 25 nm; the heat-treated manganese iron phosphate has certain crystallinity and still maintains a monoclinic phase structure; a large number of porous structures are distributed between the particles, with a particle size of 45 nm; the manganese iron phosphate material has a mesoporous structure, with a pore size distribution of mainly about 4-5 nm and a specific surface area of about 14.5 m²/g.

### Example 3

This example provides a nanoporous manganese iron phosphate, having a chemical formula of Mn_{0.72}Fe_{0.28}PO₄, and its preparation method is as follows:
1) concentrated phosphoric acid solution and deionized water were placed in a glass beaker in turn and well stirred to obtain an aqueous solution of phosphoric acid with a mass concentration of 60%; polyethylene glycol and deionized water were placed in another glass beaker in turn and well stirred to obtain an aqueous solution of polyethylene glycol with a mass concentration of 0.5%; according to the molar ratio of ((Mn+Fe)): P element being 1:1.5, 76.52 g of a micron-sized manganese iron oxide having a molecular formula of (Mn_{0.72}Fe_{0.28})₃O₄ (purchased from Sichuan Qingyuan New Materials Co., Ltd., with an average particle size of 7 µm) was added to 245 mL of the aqueous solution of polyethylene glycol, and a resulting solution was then mechanically stirred for 30 min to obtain a black aqueous suspension; 245 g of the aqueous solution of phosphoric acid was then completely added to the black aqueous suspension slowly and a resulting solution was mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green manganese iron phosphate monohydrate; and
3) the manganese iron phosphate monohydrate was then sintered in a muffle furnace at 400 °C for 2 h to obtain a reddish brown nanoporous manganese iron phosphate.

After testing and analysis, the obtained manganese iron phosphate monohydrate is monoclinic MnPO₄·H₂O with a particle size of 20 nm; the heat-treated manganese iron phosphate has certain crystallinity and still maintains a monoclinic phase structure; a large number of porous structures are distributed between the particles, with a particle size of 40 nm; the manganese iron phosphate material has a mesoporous structure, with a pore size distribution of mainly about 3-5 nm and a specific surface area of about 15.1 m²/g.

### Example 4

This example provides a nanoporous manganese iron phosphate, having a chemical formula of Mn_{0.65}Fe_{0.35}PO₄, and its preparation method is as follows:
1) concentrated phosphoric acid solution and deionized water were placed in a glass beaker in turn and well stirred to obtain an aqueous solution of phosphoric acid with a mass concentration of 40%; according to the molar ratio of (Mn+Fe): P element being 1:2, 76.59 g of a micron-sized manganese iron oxide having a molecular formula of (Mn_{0.65}Fe_{0.35})₃O₄ (purchased from Sichuan Qingyuan New Materials Co., Ltd., with an average particle size of 7 µm) was added to 490 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green manganese iron phosphate monohydrate; and
3) the manganese iron phosphate monohydrate was then sintered in a muffle furnace at 400 °C for 2 h to obtain a reddish brown nanoporous manganese iron phosphate.

After testing and analysis, the obtained manganese iron phosphate monohydrate is monoclinic MnPO₄·H₂O with a particle size of 10 nm; the heat-treated manganese iron phosphate has certain crystallinity and still maintains a monoclinic phase structure; a large number of porous structures are distributed between the particles, with a particle size of 20 nm; the manganese iron phosphate material has a mesoporous structure, with a pore size distribution of mainly about 2-4 nm and a specific surface area of about 17 m²/g.

### Example 5

This example provides a nanoporous manganese iron phosphate, having a chemical formula of Mn_{0.99}Fe_{0.01}PO₄, and its preparation method is as follows:
1) concentrated phosphoric acid solution and deionized water were placed in a glass beaker in turn and well stirred to obtain an aqueous solution of phosphoric acid with a mass concentration of 20%; according to the molar ratio of (Mn+Fe): P element being 1:1.2, 72.3 g of a micron-sized manganese iron oxide having a molecular formula of (Mn_{0.99}Fe_{0.01})₃O₄ (purchased from Sichuan Qingyuan New Materials Co., Ltd., with an average particle size of 7 µm) was added to 588 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green manganese iron phosphate monohydrate; and
3) the manganese iron phosphate monohydrate was then sintered in a muffle furnace at 400 °C for 2 h to obtain a reddish brown nanoporous manganese iron phosphate.

After testing and analysis, the obtained manganese iron phosphate monohydrate is monoclinic MnPO₄·H₂O with a particle size of 30 nm; the heat-treated manganese iron phosphate has certain crystallinity and still maintains a monoclinic phase structure; a large number of porous structures are distributed between the particles, with a particle size of 50 nm; the manganese iron phosphate material has a mesoporous structure, with a pore size distribution of mainly about 5-8 nm and a specific surface area of about 13.8 m²/g.

### Example 6

This example provides a nanoporous manganese iron phosphate, having a chemical formula of Mn_{0.5}Fe_{0.5}PO₄, and its preparation method is as follows:
1) concentrated phosphoric acid solution and deionized water were placed in a glass beaker in turn and well stirred to obtain an aqueous solution of phosphoric acid with a mass concentration of 30%; according to the molar ratio of (Mn+Fe): P element being 1:1.5, 76.72 g of a micron-sized manganese iron oxide having a molecular formula of (Mn_{0.5}Fe_{0.5})₃O₄ (purchased from Sichuan Qingyuan New Materials Co., Ltd., with an average particle size of 7 µm) was added to 490 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green manganese iron phosphate monohydrate; and
3) the manganese iron phosphate monohydrate was then sintered in a muffle furnace at 400 °C for 2 h to obtain a reddish brown nanoporous manganese iron phosphate.

After testing and analysis, the obtained manganese iron phosphate monohydrate is monoclinic MnPO₄·H₂O with a particle size of 15 nm; the heat-treated manganese iron phosphate has certain crystallinity and still maintains a monoclinic phase structure; a large number of porous structures are distributed between the particles, with a particle size of 30 nm; the manganese iron phosphate material has a mesoporous structure, with a pore size distribution of mainly about 3-5 nm and a specific surface area of about 16.4 m²/g.

### Example 7

This example provides a nanoporous manganese iron phosphate, having a chemical formula of Mn_{0.01}Fe_{0.99}PO₄, and its preparation method is as follows:
1) concentrated phosphoric acid solution and deionized water were placed in a glass beaker in turn and well stirred to obtain an aqueous solution of phosphoric acid with a mass concentration of 40%; according to the molar ratio of (Mn+Fe): P element being 1:1.2, 77.16 g of a micron-sized manganese iron oxide having a molecular formula of (Mn_{0.01}Fe_{0.99})₃O₄ (purchased from Sichuan Qingyuan New Materials Co., Ltd., with an average particle size of 7 µm) was added to 294 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green manganese iron phosphate monohydrate; and
3) the manganese iron phosphate monohydrate was then sintered in a muffle furnace at 400 °C for 2 h to obtain a reddish brown nanoporous manganese iron phosphate.

After testing and analysis, the obtained manganese iron phosphate monohydrate is monoclinic MnPO₄·H₂O with a particle size of 25 nm; the heat-treated manganese iron phosphate has certain crystallinity and still maintains a monoclinic phase structure; a large number of porous structures are distributed between the particles, with a particle size of 50 nm; the manganese iron phosphate material has a mesoporous structure, with a pore size distribution of mainly about 3-5 nm and a specific surface area of about 15.4 m²/g.

### Comparative Example 1

This comparative example provides a comparative phosphate material, and its preparation method is basically the same as that of Example 1. The preparation method is as follows:
1) concentrated phosphoric acid solution and deionized water were placed in a glass beaker in turn and well stirred to obtain an aqueous solution of phosphoric acid with a mass concentration of 35%; according to the molar ratio of (Mn+Fe): P element being 1:1.5, a mixture of MnO (34.38 g) and iron oxide (15.62 g) (where the molar ratio of Mn to Fe was 6.9:3.1, and the particle sizes of manganese oxide and iron oxide were both 7 µm) was then added to 265 mL of the aqueous solution of phosphoric acid and a resulting solution was then mechanically stirred for 12 h to obtain a reaction mixture;
2) the reaction mixture was then ground in a sand grinder for 1 h to obtain a dark brown slurry; the dark brown slurry was then filtered and washed to obtain particles, and the particles were then dried at 100 °C to obtain a dark brown product; and
3) the product of step 2) was sintered in a muffle furnace at 400 °C for 2 h to obtain a dark brown final product.

According to the XRD graph and SEM images of the product obtained in step 2), as shown in FIG. 9 and FIGS. 10-11 respectively, the product is a mixture of manganese phosphate monohydrate MnPO₄·H₂O and iron oxide, with an uneven particle size distribution between 50 nm and 1000 nm, where small particles of about 50 nm are MnPO₄·H₂O, and large particles of about 1000 nm are iron oxide. According to the XRD graph and SEM image of the final product obtained in step 3), as shown in FIGS. 12 and 13 respectively, the final product is a mixture of manganese phosphate with low crystallinity and iron oxide, and the particle size distribution of the final product is also uneven, mainly between 50 nm and 1000 nm, with more pore structures between small particles, but denser large particles.

### Comparative Example 2

This comparative example provides a comparative phosphate material, and its preparation process is basically the same as that of Example 1. The preparation method is as follows:
1) concentrated phosphoric acid solution and deionized water were placed in a glass beaker in turn and well stirred to obtain an aqueous solution of phosphoric acid with a mass concentration of 35%; according to the molar ratio of (Mn+Fe): P element being 1:1.5, a mixture of Mn₂O₃ (47.36 g) and Fe₂O₃ (31.94 g) (the particle sizes of Mn₂O₃ and Fe₂O₃ were both 7 µm, and the molar ratio of Mn to Fe was 6:4) was then added to 420 mL of the aqueous solution of phosphoric acid and a resulting solution was then mechanically stirred for 12 h to obtain a reaction mixture;
2) the reaction mixture was then ground in a sand grinder for 1 h to obtain a dark brown slurry; the dark brown slurry was then filtered and washed to obtain particles, and the particles were then dried at 100 °C to obtain a dark brown product; and
3) the product of step 2) was sintered in a muffle furnace at 400 °C for 2 h to obtain a dark brown final product.

According to the SEM images shown in FIGS. 16 and 17, the product obtained in step 2) is a mixture of manganese phosphate monohydrate MnPO₄·H₂O and iron oxide, with an uneven particle size distribution between 30 nm and 1000 nm, where small particles of about 30 nm are MnPO₄·H₂O, and large particles of about 1000 nm are iron oxide. The final product obtained in step 3) was a mixture of manganese phosphate with low crystallinity and iron oxide. According to the SEM image of the final product shown in FIG. 18, the final product has an uneven primary particle size distribution, mainly between 50 nm and 800 nm, with more pore structures between small particles, but denser large particles.

### Comparative Example 3

This comparative example provides a comparative phosphate material, and its preparation method is basically the same as that of Example 1 except that no grinding was performed in step 2). The preparation method is as follows:
1) concentrated phosphoric acid solution and deionized water were placed in a glass beaker in turn and well stirred to obtain an aqueous solution of phosphoric acid with a mass concentration of 35%; according to the molar ratio of (Mn+Fe): P element being 1:1.5, 50 g of a micron-sized manganese iron oxide having a molecular formula of (Mn_{0.60}Fe_{0.40})₃O₄ (purchased from Sichuan Qingyuan New Materials Co., Ltd., with an average particle size of 7 µm) was added to 275 mL of the aqueous solution of phosphoric acid, and a resulting solution was then mechanically stirred for 12 h to obtain a reaction mixture;
2) the reaction mixture was then filtered and washed to obtain particles, and the particles were then dried at 100 °C to obtain a black powder material; and
3) the black powder material was then sintered in a muffle furnace at 400 °C for 2 h to obtain a brown-black powder material.

The black powder material obtained in step 2) was still mainly composed of a manganese iron oxide, with a small amount of manganese iron phosphate monohydrate; the brown-black powder material obtained in step 3) was also mainly composed of a manganese iron oxide, with a small amount of manganese iron phosphate.

### Example 8

This example provides a nanoporous dopant-modified manganese iron phosphate, having a chemical formula of Mn_{0.6}Fe_{0.395}Co_{0.005}PO₄, and its preparation method is as follows:
1) concentrated phosphoric acid solution and deionized water were placed in a glass beaker in turn and well stirred to obtain an aqueous solution of phosphoric acid with a mass concentration of 35%; according to the molar ratio of (Mn+Fe): P element being 1:1.5, 114.95 g of a micron-sized manganese iron oxide having a molecular formula of (Mn_{0.60}Fe_{0.40})₃O₄ (purchased from Sichuan Qingyuan New Materials Co., Ltd., with an average particle size of 7 µm) and 1.190 g of CoCl₂·6H₂O were added to 630 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (manganese iron cobalt phosphate monohydrate); and
3) the manganese iron cobalt phosphate monohydrate was then sintered in a muffle furnace at 400 °C for 2 h to obtain a reddish brown powder (manganese iron cobalt phosphate).

According to the XRD graph and SEM images of the manganese iron cobalt phosphate monohydrate obtained in step 2), as shown in FIG. 21 and FIGS. 22-23 respectively, the manganese iron cobalt phosphate monohydrate is monoclinic MnPO₄·H₂O. The particle size of the manganese iron cobalt phosphate monohydrate was 20 nm, as measured by the SEM test method. According to the XRD graph and SEM image of the manganese iron cobalt phosphate obtained in step 3), as shown in FIGS. 24 and 25 respectively, the manganese iron cobalt phosphate has certain crystallinity, and a large number of porous structures are distributed between the particles. The XRD test shows that the manganese iron cobalt phosphate still maintains a monoclinic phase structure. The particle size of the manganese iron cobalt phosphate is 40 nm as measured by the SEM test method; also, a specific surface area and pore size tester was used to perform adsorption-desorption test and analysis on the manganese iron cobalt phosphate. As shown in FIGS. 31 and 32, the manganese iron cobalt phosphate has a mesoporous structure, with a pore size distribution of mainly about 3-5 nm and a specific surface area of about 15.1 m²/g.

### Example 9

This example provides a nanoporous dopant-modified manganese iron phosphate, having a chemical formula of Mn_{0.65}Fe_{0.344}Mg_{0.005}B_{0.001}PO₄, and its preparation method is as follows:
1) concentrated phosphoric acid solution and deionized water were placed in a glass beaker in turn and well stirred to obtain an aqueous solution of phosphoric acid with a mass concentration of 30%; according to the molar ratio of (Mn+Fe): P element being 1:1.5, 114.88 g of a micron-sized manganese iron oxide having a molecular formula of (Mn_{0.65}Fe_{0.35})₃O₄ (purchased from Sichuan Qingyuan New Materials Co., Ltd., with an average particle size of 7 µm), 0.201 g of magnesium oxide, and 0.062 g of boric acid were added to 735 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (Mg-B-doped manganese iron phosphate monohydrate); and
3) the Mg-B-doped manganese iron phosphate monohydrate was then sintered in a muffle furnace at 400 °C for 2 h to obtain a reddish brown powder.

After testing and analysis, the obtained Mg-B-doped manganese iron phosphate monohydrate is monoclinic MnPO₄·H₂O with a particle size of 25 nm; the heat-treated Mg-B-doped manganese iron phosphate has certain crystallinity and still maintains a monoclinic phase structure; a large number of porous structures are distributed between the particles, with a particle size of 45 nm; the Mg-B-doped manganese iron phosphate monohydrate has a mesoporous structure, with a pore size distribution of mainly about 4-6 nm and a specific surface area of about 14.8 m²/g.

### Example 10

This example provides a nanoporous dopant-modified manganese iron phosphate, having a chemical formula of Mn_{0.7}Fe_{0.293}Mo_{0.003}Nb_{0.003}B_{0.001}PO₄, and its preparation method is as follows:
1) concentrated phosphoric acid solution and deionized water were placed in a glass beaker in turn and well stirred to obtain an aqueous solution of phosphoric acid with a mass concentration of 25%; according to the molar ratio of (Mn+Fe): P element being 1:1.5, 114.81 g of a micron-sized manganese iron oxide having a molecular formula of (Mn_{0.70}Fe_{0.30})₃O₄ (purchased from Sichuan Qingyuan New Materials Co., Ltd., with an average particle size of 7 µm), 0.432 g of MoO₃, 1.614 g of niobium oxalate, and 0.062 g of boric acid were added to 882 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (Mo-Nb-B-doped manganese iron phosphate monohydrate); and
3) the Mo-Nb-B-doped manganese iron phosphate monohydrate was then sintered in a muffle furnace at 400 °C for 2 h to obtain a reddish brown powder.

After testing and analysis, the obtained Mo-Nb-B-doped manganese iron phosphate monohydrate is monoclinic MnPO₄·H₂O with a particle size of 30 nm; the heat-treated Mo-Nb-B-doped manganese iron phosphate has certain crystallinity and still maintains a monoclinic phase structure; a large number of porous structures are distributed between the particles, with a particle size of 50 nm; the Mo-Nb-B-doped manganese iron phosphate has a mesoporous structure, with a pore size distribution of mainly about 4-6 nm and a specific surface area of about 14.1 m²/g.

### Example 11

This example provides a nanoporous dopant-modified manganese iron phosphate, having a chemical formula of Mn_{0.8}Fe_{0.19}Co_{0.005}V_{0.001}Ni_{0.001}B_{0.003}PO₄, and its preparation method is as follows:
1) concentrated phosphoric acid solution and deionized water were placed in a glass beaker in turn and well stirred to obtain an aqueous solution of phosphoric acid with a mass concentration of 30%; according to the molar ratio of (Mn+Fe): P element being 1:1.5, 114.66 g of a micron-sized manganese iron oxide having a molecular formula of (Mn_{0.81}Fe_{0.19})₃O₄ (purchased from Sichuan Qingyuan New Materials Co., Ltd., with an average particle size of 7 µm), 1.245 g of (CH₃COO)₂Co·4H₂O, 0.117 g of ammonium metavanadate, 0.263 g of NiSO₄·6H₂O, and 0.185 g of boric acid were added to 735 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (Co-V-Ni-B-doped manganese iron phosphate monohydrate); and
3) the Co-V-Ni-B-doped manganese iron phosphate monohydrate was then sintered in a muffle furnace at 400 °C for 2 h to obtain a reddish brown powder.

After testing and analysis, the obtained Co-V-Ni-B-doped manganese iron phosphate monohydrate is monoclinic MnPO₄·H₂O with a particle size of 20 nm; the heat-treated Co-V-Ni-B-doped manganese iron phosphate has certain crystallinity and still maintains a monoclinic phase structure; a large number of porous structures are distributed between the particles, with a particle size of 40 nm; the Co-V-Ni-B-doped manganese iron phosphate has a mesoporous structure, with a pore size distribution of mainly about 3-5 nm and a specific surface area of about 15.8 m²/g.

### Example 12

This example provides a nanoporous dopant-modified manganese iron phosphate, having a chemical formula of Mn_{0.5}Fe_{0.495}Mg_{0.005}PO₄, and its preparation method is as follows:
1) concentrated phosphoric acid solution and deionized water were placed in a glass beaker in turn and well stirred to obtain an aqueous solution of phosphoric acid with a mass concentration of 25%; according to the molar ratio of (Mn+Fe): P element being 1:1.5, 115.08 g of a micron-sized manganese iron oxide having a molecular formula of (Mn_{0.50}Fe_{0.50})₃O₄ (purchased from Sichuan Qingyuan New Materials Co., Ltd., with an average particle size of 7 µm) and 1.072 g of magnesium acetate tetrahydrate were added to 882 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (manganese iron magnesium phosphate monohydrate); and
3) the manganese iron magnesium phosphate monohydrate was then sintered in a muffle furnace at 400 °C for 2 h to obtain a reddish brown powder.

After testing and analysis, the obtained manganese iron magnesium phosphate monohydrate is monoclinic MnPO₄·H₂O with a particle size of 25 nm; the heat-treated manganese iron magnesium phosphate has certain crystallinity and still maintains a monoclinic phase structure; a large number of porous structures are distributed between the particles, with a particle size of 45 nm; the manganese iron magnesium phosphate has a mesoporous structure, with a pore size distribution of mainly about 4-6 nm and a specific surface area of about 15.1 m²/g.

### Example 13

This example provides a nanoporous dopant-modified manganese iron phosphate, having a chemical formula of Mn_{0.65}Fe_{0.34}V_{0.005}Ti_{0.005}PO₄, and its preparation method is as follows:
1) concentrated phosphoric acid solution and deionized water were placed in a glass beaker in turn and well stirred to obtain an aqueous solution of phosphoric acid with a mass concentration of 25%; according to the molar ratio of (Mn+Fe): P element being 1:1.5, 114.87 g of a micron-sized manganese iron oxide having a molecular formula of (Mn_{0.66}Fe_{0.34})₃O₄ (purchased from Sichuan Qingyuan New Materials Co., Ltd., with an average particle size of 7 µm), 1.225 g of vanadyl oxalateVOC₂O₄, and 0.948 g of titanium chloride were added to 882 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (V-Ti-doped manganese iron phosphate monohydrate); and
3) the V-Ti-doped manganese iron phosphate monohydrate was then sintered in a muffle furnace at 400 °C for 2 h to obtain a reddish brown powder.

After testing and analysis, the obtained V-Ti-doped manganese iron phosphate monohydrate is monoclinic MnPO₄·H₂O with a particle size of 25 nm; the heat-treated V-Ti-doped manganese iron phosphate has certain crystallinity and still maintains a monoclinic phase structure; a large number of porous structures are distributed between the particles, with a particle size of 45 nm; the V-Ti-doped manganese iron phosphate monohydrate has a mesoporous structure, with a pore size distribution of mainly about 4-6 nm and a specific surface area of about 14.8 m²/g.

### Comparative Example 4

This comparative example provides a comparative phosphate material, and its preparation process is basically the same as that of Example 8. The preparation method is as follows:
1) concentrated phosphoric acid solution and deionized water were placed in a glass beaker in turn and well stirred to obtain an aqueous solution of phosphoric acid with a mass concentration of 35%; according to the molar ratio of (Mn+Fe): P element being 1:1.5, a mixture of Mn₂O₃ (47.36 g) and Fe₂O₃ (31.94 g) (the particle sizes of Mn₂O₃ and Fe₂O₃ were both 7 µm) and 1.190 g of CoCl₂·6H₂O were then added to 420 mL of the aqueous solution of phosphoric acid and a resulting solution was then mechanically stirred for 12 h to obtain a reaction mixture;
2) the reaction mixture was then ground in a sand grinder for 1 h to obtain a dark brown slurry; the dark brown slurry was then filtered and washed to obtain particles, and the particles were then dried at 100 °C to obtain a dark brown product; and
3) the product of step 2) was sintered in a muffle furnace at 400 °C for 2 h to obtain a dark brown final product.

According to the XRD graph and SEM images of the product obtained in step 2), as shown in FIG. 26 and FIGS. 27-28 respectively, the product is a mixture of Co-doped manganese phosphate monohydrate MnPO₄·H₂O and iron oxide, with an uneven particle size distribution between 30 nm and 2000 nm, where small particles of about 30 nm are Co-doped manganese phosphate monohydrate, and large particles of about 2000 nm are iron oxide. According to the XRD graph and SEM image of the final product obtained in step 3), as shown in FIGS. 29 and 30 respectively, the final product is a mixture of Co-doped manganese phosphate with low crystallinity and iron oxide, and the particle size distribution of the final product is also uneven, mainly between 50 nm and 2000 nm, with more pore structures between small particles, but denser large particles.

### Comparative Example 5

This comparative example provides a comparative phosphate material, and its preparation process is basically the same as that of Example 8 except that no CoCl₂·6H₂O was added in step 1). The preparation method is as follows:
1) concentrated phosphoric acid solution and deionized water were placed in a glass beaker in turn and well stirred to obtain an aqueous solution of phosphoric acid with a mass concentration of 35%; according to the molar ratio of (Mn+Fe): P element being 1:1.5, 114.95 g of a micron-sized manganese iron oxide having a molecular formula of (Mn_{0.60}Fe_{0.40})₃O₄ (purchased from Sichuan Qingyuan New Materials Co., Ltd., with an average particle size of 7 µm) was added to 630 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (manganese iron phosphate monohydrate); and
3) the manganese iron phosphate monohydrate was then sintered in a muffle furnace at 400 °C for 2 h to obtain a reddish brown powder (manganese iron phosphate).

The dark green powder obtained in step 2) was tested and analyzed by XRD and SEM, and the results show that the material is monoclinic MnPO₄·H₂O with a particle size of 20 nm.

The reddish brown powder obtained in step 3) was tested and analyzed by XRD and SEM, and the results show that the crystal phase of the material still remains a monoclinic phase structure with a particle size of 40 nm. The manganese iron phosphate material has a mesoporous structure, with a pore size distribution of mainly about 3-5 nm and a specific surface area of about 15.0 m²/g.

### Example 14

This example provides a nanoporous dopant-modified manganese iron phosphate, having a chemical formula of Mn_{0.6}Fe_{0.39}Zn_{0.001}Cu_{0.0005}Mg_{0.005}Mo_{0.003}Ti_{0.0005}PO₄, and its preparation method is as follows:
1) concentrated phosphoric acid solution and deionized water were placed in a glass beaker in turn and well stirred to obtain an aqueous solution of phosphoric acid with a mass concentration of 25%; according to the molar ratio of (Mn+Fe): P element being 1:1.5, 114.93 g of a micron-sized manganese iron oxide having a molecular formula of (Mn_{0.61}Fe_{0.39})₃O₄ (purchased from Sichuan Qingyuan New Materials Co., Ltd., with an average particle size of 7 µm), 0.081 g of zinc oxide, 0.040 g of copper oxide, 0.20 g of magnesium oxide, 0.432 g of molybdenum oxide, and 0.040 g of TiO₂ were added to 882 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (doped manganese iron phosphate monohydrate); and
3) the doped manganese iron phosphate monohydrate was then sintered in a muffle furnace at 400 °C for 2 h to obtain a reddish brown powder.

According to the XRD graph and SEM images of the manganese iron oxide, as shown in FIG. 35 and FIGS. 36-37 respectively, the manganese iron oxide has a crystalline structure. According to the XRD graph and SEM images of the doped manganese iron phosphate monohydrate obtained in step 2), as shown in FIG. 38 and FIGS. 39-40 respectively, the crystalline phase of the doped manganese iron phosphate monohydrate is monoclinic MnPO₄·H₂O. The particle size of the doped-manganese iron phosphate monohydrate was 25 nm, as measured by the SEM test method. According to the XRD graph and SEM image of the doped-manganese iron phosphate obtained in step 3), as shown in FIGS. 41 and 42 respectively, the doped-manganese iron phosphate has certain crystallinity, and a large number of porous structures are distributed between the particles. The XRD test shows that the crystal phase still maintains a monoclinic phase structure. The particle size of the doped manganese iron phosphate is 35 nm as measured by the SEM test method; also, a specific surface area and pore size tester was used to perform adsorption-desorption test and analysis on the doped manganese iron phosphate. As shown in FIGS. 48 and 49, the doped manganese iron phosphate material has a mesoporous structure, with a pore size distribution of mainly about 4-6 nm and a specific surface area of about 15.1 m²/g.

### Example 15

This example provides a nanoporous doped manganese iron phosphate, having a chemical formula of Mn_{0.7}Fe_{0.293}Mg_{0.0015}V_{0.001}Ti_{0.0005}Cr_{0.001}Mo_{0.003}PO₄, and its preparation process is as follows:
1) concentrated phosphoric acid solution and deionized water were placed in a glass beaker in turn and well stirred to obtain an aqueous solution of phosphoric acid with a mass concentration of 25%; according to the molar ratio of (Mn+Fe): P element being 1:1.5, 114.81 g of micron-sized manganese iron oxide having a molecular formula of (Mn_{0.70}Fe_{0.30})₃O₄ (purchased from Sichuan Qingyuan New Materials Co., Ltd., with an average particle size of 7 µm), 0.060 g of zinc oxide, 0.060 g of magnesium oxide, 0.117 g of ammonium metavanadate, 0.399 g of TiO₂, 0.152 g of Cr₂O₃, and 0.432 g of molybdenum oxide were added to 882 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (doped manganese iron phosphate monohydrate); and
3) the doped manganese iron phosphate monohydrate was then sintered in a muffle furnace at 400 °C for 2 h to obtain a reddish brown powder.

After testing and analysis, the obtained doped manganese iron phosphate monohydrate is monoclinic MnPO₄·H₂O with a particle size of 25 nm; the heat-treated doped manganese iron phosphate has certain crystallinity and still maintains a monoclinic phase structure; a large number of porous structures are distributed between the particles, with a particle size of 35 nm; the doped manganese iron phosphate monohydrate has a mesoporous structure, with a pore size distribution of mainly about 4-6 nm and a specific surface area of about 14.8 m²/g.

### Example 16

This example provides a nanoporous doped manganese iron phosphate, having a chemical formula of Mn_{0.7}Fe_{0.29}Nb_{0.003}B_{0.003}Co_{0.001}V_{0.002}Al_{0.001}PO₄, and its preparation method is as follows:
1) concentrated phosphoric acid solution and deionized water were placed in a glass beaker in turn and well stirred to obtain an aqueous solution of phosphoric acid with a mass concentration of 30%; according to the molar ratio of (Mn+Fe): P element being 1:1.5, 114.80 g of a micron-sized manganese iron oxide having a molecular formula of (Mn_{0.71}Fe_{0.29})₃O₄ (purchased from Sichuan Qingyuan New Materials Co., Ltd., with an average particle size of 7 µm), 1.614 g of niobium oxalate, 0.104 g of B₂O₃, 0.177 g of cobalt acetate, 0.234 g of ammonium metavanadate, and 0.051 g of aluminum oxide were added to 735 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (doped manganese iron phosphate monohydrate); and
3) the doped manganese iron phosphate monohydrate was then sintered in a muffle furnace at 400 °C for 2 h to obtain a reddish brown powder.

After testing and analysis, the obtained doped manganese iron phosphate monohydrate is monoclinic MnPO₄·H₂O with a particle size of 20 nm; the heat-treated doped manganese iron phosphate has certain crystallinity and still maintains a monoclinic phase structure; a large number of porous structures are distributed between the particles, with a particle size of 30 nm; the doped manganese iron phosphate monohydrate has a mesoporous structure, with a pore size distribution of mainly about 3-5 nm and a specific surface area of about 16.5 m²/g.

### Example 17

This example provides a nanoporous high-entropy doped manganese iron phosphate, having a chemical formula of Mn_{0.8}Fe_{0.19}Co_{0.005}V_{0.001}Ni_{0.0005}B_{0.003}Nb_{0.0005}PO₄, and its preparation method is as follows:
1) concentrated phosphoric acid solution and deionized water were placed in a glass beaker in turn and well stirred to obtain an aqueous solution of phosphoric acid with a mass concentration of 30%; according to the molar ratio of (Mn+Fe): P element being 1:1.5, 114.66 g of a micron-sized manganese iron oxide having a molecular formula of (Mn_{0.81}Fe_{0.19})₃O₄ (purchased from Sichuan Qingyuan New Materials Co., Ltd., with an average particle size of 7 µm), 0.885 g of cobalt acetate, 0.117 g of ammonium metavanadate, 0.088 g of nickel acetate, 0.186 g of boric acid, and 0.269 g of niobium oxalate were added to 735 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (doped manganese iron phosphate monohydrate); and
3) the doped manganese iron phosphate monohydrate was then sintered in a muffle furnace at 400 °C for 2 h to obtain a reddish brown powder.

After testing and analysis, the obtained doped manganese iron phosphate monohydrate is monoclinic MnPO₄·H₂O with a particle size of 20 nm; the heat-treated doped manganese iron phosphate has certain crystallinity and still maintains a monoclinic phase structure; a large number of porous structures are distributed between the particles, with a particle size of 30 nm; the doped manganese iron phosphate monohydrate has a mesoporous structure, with a pore size distribution of mainly about 4-5 nm and a specific surface area of about 16.8 m²/g.

### Example 18

This example provides a nanoporous doped manganese iron phosphate, having a chemical formula of Mn_{0.5}Fe_{0.49}Co _{0.0025}Ga_{0.0005}B_{0.003}Al_{0.002}Sr_{0.002}PO₄, and its preparation method is as follows:
1) concentrated phosphoric acid solution and deionized water were placed in a glass beaker in turn and well stirred to obtain an aqueous solution of phosphoric acid with a mass concentration of 25%; according to the molar ratio of (Mn+Fe): P element being 1:1.5, 115.07g of a micron-sized manganese iron oxide having a molecular formula of (Mn_{0.51}Fe_{0.49})₃O₄ (purchased from Sichuan Qingyuan New Materials Co., Ltd., with an average particle size of 7 µm), 0.325 g of cobalt chloride, 0.088 g of gallium chloride, 0.186 g of boric acid, 0.102 g of Al₂O₃, and 0.317 g of strontium chloride were added to 882 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (doped manganese iron phosphate monohydrate); and
3) the doped manganese iron phosphate monohydrate was then sintered in a muffle furnace at 400 °C for 2 h to obtain a reddish brown powder.

After testing and analysis, the obtained doped manganese iron phosphate monohydrate is monoclinic MnPO₄·H₂O with a particle size of 25 nm; the heat-treated doped manganese iron phosphate has certain crystallinity and still maintains a monoclinic phase structure; a large number of porous structures are distributed between the particles, with a particle size of 35 nm; the doped manganese iron phosphate monohydrate has a mesoporous structure, with a pore size distribution of mainly about 4-6 nm and a specific surface area of about 14.5 m²/g.

### Example 19

This example provides a nanoporous doped manganese iron phosphate, having a chemical formula of Mn_{0.65}Fe_{0.34}Mo_{0.003}Co_{0.003}Ni_{0.002}V_{0.0015}Ca_{0.0005}PO₄, and its preparation method is as follows:
1) concentrated phosphoric acid solution and deionized water were placed in a glass beaker in turn and well stirred to obtain an aqueous solution of phosphoric acid with a mass concentration of 25%; according to the molar ratio of (Mn+Fe): P element being 1:1.5, 114.87 g of a micron-sized manganese iron oxide having a molecular formula of (Mn_{0.66}Fe_{0.34})₃O₄ (purchased from Sichuan Qingyuan New Materials Co., Ltd., with an average particle size of 7 µm), 0.432 g of molybdenum oxide, 0.389 g of cobalt chloride, 0.259 g of nickel chloride, 0.4 g of vanadium oxalate, and 0.028 g of calcium oxide were added to 882 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (doped manganese iron phosphate monohydrate); and
3) the doped manganese iron phosphate monohydrate was then sintered in a muffle furnace at 400 °C for 2 h to obtain a reddish brown powder.

After testing and analysis, the obtained doped manganese iron phosphate monohydrate is monoclinic MnPO₄·H₂O with a particle size of 25 nm; the heat-treated doped manganese iron phosphate has certain crystallinity and still maintains a monoclinic phase structure; a large number of porous structures are distributed between the particles, with a particle size of 35 nm; the doped manganese iron phosphate monohydrate has a mesoporous structure, with a pore size distribution of mainly about 4-6 nm and a specific surface area of about 14.7 m²/g.

### Comparative Example 6

This comparative example provides a comparative phosphate material, and its preparation method is basically the same as that of Example 14. The preparation method is as follows:
1) concentrated phosphoric acid solution and deionized water were placed in a glass beaker in turn and well stirred to obtain an aqueous solution of phosphoric acid with a mass concentration of 25%; according to the molar ratio of (Mn+Fe): P element being 1:1.5, a mixture of Mn₂O₃ (48.15g) and Fe₂O₃ (31.14g) (the particle sizes of Mn₂O₃ and Fe₂O₃ were both 7 µm), 0.081 g of zinc oxide, 0.040 g of copper oxide, 0.20 g of magnesium oxide, 0.432 g of molybdenum oxide, and 0.040 g of TiO₂, were then added to 882 mL of the aqueous solution of phosphoric acid and a resulting solution was then mechanically stirred for 12 h to obtain a reaction mixture;
2) the reaction mixture was then ground in a sand grinder for 1 h to obtain a dark brown slurry; the dark brown slurry was then filtered and washed to obtain particles, and the particles were then dried at 100 °C to obtain a dark brown product; and
3) the product of step 2) was sintered in a muffle furnace at 400 °C for 2 h to obtain a dark brown final product.

According to the XRD graph and SEM images of the product obtained in step 2), as shown in FIG. 43 and FIGS. 44-45 respectively, the product is a mixture of Zn-Cu-Mg-Mo-Ti-doped manganese phosphate monohydrate (Mn_{0.9839}Zn_{0.0016}Cu_{0.0008}Mg_{0.0081}Mo_{0.0048}Ti_{0.0008})PO₄·H₂O and iron oxide, with an uneven particle size distribution between 50 nm and 2000 nm, where small particles of about 50 nm are Zn-Cu-Mg-Mo-Ti-doped manganese phosphate monohydrate, and large particles of about 2000 nm are iron oxide. According to the XRD graph and SEM image of the final product obtained in step 3), as shown in FIGS. 46 and 47 respectively, the final product is a mixture of Zn-Cu-Mg-Mo-Ti-doped manganese phosphate (Mn _{0.9839}Zn_{0.0016}Cu_{0.0008}Mg_{0.0081}Mo_{0.0048}Ti_{0.0008})PO₄ with low crystallinity and iron oxide, and the particle size distribution of the final product is also uneven, mainly between 50 nm and 2000 nm, with more pore structures between small particles, but denser large particles.

### Comparative Example 7

This comparative example provides a comparative phosphate material, and its preparation process is basically the same as that of Example 14 except that only compounds of four doping elements were added in step 1). The preparation method is as follows:
1) concentrated phosphoric acid solution and deionized water were placed in a glass beaker in turn and well stirred to obtain an aqueous solution of phosphoric acid with a mass concentration of 25%; according to the molar ratio of (Mn+Fe): P element being 1:1.5, 114.93 g of a micron-sized manganese iron oxide having a molecular formula of (Mn_{0.61}Fe_{0.39})₃O₄ (purchased from Sichuan Qingyuan New Materials Co., Ltd., with an average particle size of 7 µm), 0.081 g of zinc oxide, 0.040 g of copper oxide, 0.20 g of magnesium oxide, and 0.040 g of TiO₂ were added to 882 mL of the aqueous solution of phosphoric acid, and a resulting solution was then mechanically stirred for 12 h to obtain a reaction mixture;
2) the reaction mixture was then ground in a sand grinder for 1 h to obtain a dark green slurry; the dark green slurry was then filtered and washed to obtain particles, and the particles were then dried at 100 °C to obtain a dark green powder (doped manganese iron phosphate monohydrate); and
3) the doped manganese iron phosphate monohydrate was then sintered in a muffle furnace at 400 °C for 2 h to obtain a reddish brown powder.

After testing and analysis, the obtained doped manganese iron phosphate monohydrate is monoclinic MnPO₄·H₂O with a particle size of 25 nm; the heat-treated doped manganese iron phosphate has certain crystallinity and still maintains a monoclinic phase structure; a large number of porous structures are distributed between the particles, with a particle size of 35 nm; the doped manganese iron phosphate monohydrate has a mesoporous structure, with a pore size distribution of mainly about 4-6 nm and a specific surface area of about 15 m²/g.

### Application Example 1

The manganese iron phosphates or doped manganese iron phosphates prepared in Examples 1-19, Comparative Examples 1-2, and Comparative Examples 4-7 are used to prepare lithium manganese iron phosphate, and the specific operation is as follows:
1) according to an element molar ratio of Li: (Mn + Fe): P of 1.02: 1: 1, 113 g of lithium carbonate, 450.9 g of manganese iron phosphate (Mn_{0.6}Fe_{0.4}PO₄), 68.3 g of glucose and other raw materials were weighed;
2) 2.5 kg of water and the weighed glucose were fed into a sand mill and mechanically stirred for 10 min until glucose was completely dissolved;
3) the weighed manganese iron phosphate and lithium carbonate were then fed into the sand mill, sand ground and dispersed for 2 h to obtain a slurry;
4) the slurry obtained by the sand grinding dispersion was spray dried to obtain a precursor powder of lithium manganese iron phosphate (LMFP)/C; and
5) the precursor powder of LMFP/C was sintered at 350 °C for 2 h in an inert atmosphere, and then sinter at 600 °C for 10 h to finally obtain an LMFP/C cathode material.

The LMFP/C cathode material was mixed with a conductive agent (carbon nanotubes), a conductive agent (carbon black), a binder (polyvinylidene fluoride), and a solvent (N-methylpyrrolidone) to form a cathode slurry, wherein the mass ratio of the LMFP/C cathode material to the conductive agent (carbon nanotubes) to the conductive agent (carbon black) to the binder (polyvinylidene fluoride) was 91.5:1.5:1.0:6; the cathode slurry was then applied to an aluminum foil, and the aluminum foil was then vacuum baked, punched, and finally made into an LMFP/C cathode sheet. The LMFP/C (cathode), the lithium sheet (anode), vinyl carbonate EC/dimethyl carbonate DMC/methyl ethyl carbonate EMC solution with 1 mol/L LiPF₆ (electrolyte) were assembled into a button battery. The electrical properties of lithium manganese iron phosphate were tested by charging and discharging the battery (the charging and discharging window was 2.5V-4.3V). The results are shown in Table 1 below. The results of Example 1 are also shown in FIGS. 19-20, the results of Example 8 are also shown in FIGS. 33-34, and the results of Example 14 are also shown in FIGS. 50-51.

**Table 1 Electrical properties of lithium manganese iron phosphates**

| Examples | Specific discharge capacity at 0.1C current (mAh/g) | Specific discharge capacity at 1C current (mAh/g) | Capacity retention% after 200 cycles of charge and discharge at 1C rate |
|---|---|---|---|
| Example 1 | 145.2 | 135.7 | 92.9% |
| Example 2 | 142.0 | 131.1 | 90.7% |
| Example 3 | 143.5 | 132.1 | 92.1% |
| Example 4 | 145.0 | 135.2 | 93.4% |
| Example 5 | 137.9 | 118.0 | 73.5% |
| Example 6 | 147.3 | 138.1 | 94.5% |
| Example 7 | 150.1 | 141.7 | 98.3% |
| Comparative Example 1 | 121.2 | 109.1 | 67.1% |
| Comparative Example 2 | 128.0 | 120.0 | 73.4% |
| Example 8 | 148.3 | 137.6 | 93.8% |
| Example 9 | 147.8 | 136.5 | 94.2% |
| Example 10 | 147.3 | 135.4 | 92.9% |
| Example 11 | 146.0 | 135.1 | 92.4% |
| Example 12 | 149.1 | 139.2 | 94.8% |
| Example 13 | 148.3 | 137.5 | 94.1% |
| Comparative Example 4 | 121.6 | 109.5 | 67.5% |
| Comparative Example 5 | 146.2 | 136.1 | 92.8% |
| Example 14 | 152.5 | 141.1 | 98.0% |
| Example 15 | 152.8 | 141.5 | 96.4% |
| Example 16 | 152.1 | 141.8 | 96.6% |
| Example 17 | 152.6 | 141.3 | 97.4% |
| Example 18 | 153.0 | 142.1 | 97.5% |
| Example 19 | 152.7 | 141.6 | 96.8% |
| Comparative Example 6 | 122.5 | 110.3 | 68.5% |
| Comparative Example 7 | 148.0 | 137.1 | 93.5% |

The above embodiments are only to illustrate the technical concept and features of the present disclosure, and their purpose is to enable those familiar with the art to understand the content of the disclosure and implement the disclosure accordingly. They cannot limit the scope of the disclosure. All equivalent changes or modifications made according to the spirit of the present disclosure should be covered within the protection scope of the present disclosure.

## Claims

1. A manganese iron phosphate, having a chemical formula of Mn₁₋ₓFeₓPO₄, **characterized in that,** 0.01≤x≤0.99, the manganese iron phosphate having a particle size of at most 50 nm and having a porous structure.

2. The manganese iron phosphate according to claim 1, **characterized in that,** the particle size of the manganese iron phosphate is at most 40 nm, more preferably 5-40 nm, and more preferably 10-30 nm.

3. The manganese iron phosphate according to claim 1, **characterized in that,** the manganese iron phosphate has a specific surface area of 10-30 m²/g and a pore size of 2-10 nm; preferably, the manganese iron phosphate has a specific surface area of 12-18 m²/g and a pore size of 3-5 nm.

4. The manganese iron phosphate according to claim 1, **characterized in that,** 0.1≤x≤0.9; preferably, 0.2≤x≤0.5.

5. The manganese iron phosphate according to claim 1, **characterized in that,** the manganese iron phosphate is monoclinic.

6. A phosphate material, **characterized in that,** the phosphate material having a chemical formula of Mn_{1-a-b}FeₐM_{b}PO₄, M is one or more selected from the group consisting of Mg, Ti, V, Cr, Co, Ni, Zn, Ga, Al, Zr, Nb, Mo, Sn, Sb, Ca, Ba, Sr, B, Ru, Si, Te, Nb, Cu and Li, and 0.01≤a≤0.98, 10⁻⁴≤b≤10⁻², the phosphate material having a particle size of at most 50 nm and having a porous structure.

7. The phosphate material according to claim 6, **characterized in that,** the particle size of the phosphate material is at most 40 nm, more preferably 5-40 nm, and more preferably 10-30 nm.

8. The phosphate material according to claim 6, **characterized in that,** the phosphate material has a specific surface area of 10-30 m²/g and a pore size of 2-10 nm; preferably, the phosphate material has a specific surface area of 12-18 m²/g and a pore size of 3-5 nm.

9. The phosphate material according to claim 6, **characterized in that,** 0.2≤a≤0.5, 10⁻³≤b≤10⁻²; and/or, the phosphate material is monoclinic.

10. The phosphate material according to claim 6, **characterized in that,** M is Co; or, M is Mg and B; or, M is Mo, Nb and B; or, M is Co, V, Ni and B; or, M is Mg; or, M is V and Ti.

11. The phosphate material according to claim 6, **characterized in that,** the phosphate material having a chemical formula of Mn_{1-a-b}FeₐCo_{b}PO₄; or
Mn_{1-a-b}FeₐMg_{b1}B_{b2}PO₄, wherein b1+b2=b; or
Mn_{1-a-b}FeₐMo_{b1}Nb_{b2}B_{b3}PO₄, wherein b1+b2+b3=b;
Mn_{1-a-b}FeₐCo_{b1}V_{b2}Ni_{b3}B_{b4}PO₄, wherein b1+b2+b3+b4=b; or
Mn_{1-a-b}FeₐMg_{b}PO₄; or
Mn_{1-a-b}FeₐV_{b1}Ti_{b2}PO₄, wherein b1+b2=b;
wherein 10⁻⁴≤b1≤10⁻², 10⁻⁴≤b2≤10⁻², 10⁻⁴≤b3≤10⁻², 10⁻⁴≤b4≤10⁻².

12. The phosphate material according to claim 6, **characterized in that,** the phosphate material having a chemical formula of Mn_{0.6}Fe_{0.395}Co_{0.005}PO₄ or Mn_{0.65}Fe_{0.344}Mg_{0.005}B_{0.001}PO₄ or Mn_{0.7}Fe_{0.293}Mo_{0.003}Nb_{0.003}B_{0.001}PO₄ or Mn_{0.8}Fe_{0.19}Co_{0.005}V_{0.001}Ni_{0.001}B_{0.003}PO₄ or Mn_{0.5}Fe_{0.495}Mg_{0.005}PO₄ or Mn_{0.65}Fe_{0.34}V_{0.005}Ti_{0.005}PO₄.

13. The phosphate material according to claim 6, **characterized in that,** the M is five or more selected from the group consisting of Mg, Ti, V, Cr, Co, Ni, Zn, Ga, Al, Zr, Nb, Mo, Sn, Sb, Ca, Ba, Sr, B, Ru, Si, Te, Nb, Cu and Li.

14. The phosphate material according to claim 6, **characterized in that,** the phosphate material having a chemical formula of Mn_{1-a-b}FeₐMg_{b1}V_{b2}Ti_{b3}Cr_{b4}Co_{b5}PO₄, Mn_{1-a-b}FeₐZn_{b1}Cu_{b2}Mg_{b3}Co_{b4}Ti_{b5}PO₄, Mn_{1-a-b}FeₐZn_{b1}Cu_{b2}Mg_{b3}Mo_{b4}Ti_{b5}PO₄, Mn_{1-a-b}FeₐMg_{b1}V_{b2}Ti_{b3}Cr_{b4}Mo_{b5}PO₄, Mn_{1-a-b}FeₐNb_{b1}B_{b2}Co_{b3}V_{b4}Al_{b5}PO₄, Mn_{1-a-b}FeₐCo_{b1}V_{b2}Ni_{b3}B_{b4}Nb_{b5}PO₄, Mn_{1-a-b}FeₐCo_{b1}Ga_{b2}B_{b3}Al_{b4}Sr_{b5}PO₄ or Mn_{1-a-b}FeₐMo_{b1}Co_{b2}Ni_{b3}V_{b4}Ca_{b5}PO₄, wherein b1+b2+b3+b4+b5=b, the ranges of b1-b5 satisfy 10⁻⁴≤b1≤10⁻², 10⁻⁴≤b2≤10⁻², 10⁻⁴≤b3≤10⁻², 10⁻⁴≤b4≤10⁻², and 10⁻⁴≤b5≤10⁻².

15. The phosphate material according to claim 6, **characterized in that,** the phosphate material having a chemical formula of Mn_{0.7}Fe_{0.293}Mg_{0.015}V_{0.001}Ti_{0.0005}Cr_{0.001}Co_{0.003}PO₄, Mn_{0.6}Fe_{0.395}Zn_{0.001}Cu_{0.0005}Mg_{0.001}Co_{0.002}Ti_{0.0005}PO₄, Mn_{0.6}Fe_{0.39}Zn_{0.001}Cu_{0.0005}Mg_{0.005}Mo_{0.003}Ti_{0.0005}PO₄, Mn_{0.7}Fe_{0.293}Mg_{0.0015}V_{0.001}Ti_{0.0005}Cr_{0.001}Mo_{0.003}PO₄, Mn_{0.7}Fe_{0.20}Nb_{0.003}B_{0.003}Co_{0.001}V_{0.002}Al_{0.001}PO₄, Mn_{0.8}Fe_{0.19}Co_{0.005}V_{0.001}Ni_{0.0005}B_{0.003}Nb_{0.0005}PO₄, Mn_{0.5}Fe_{0.49}Co_{0.0025}Ga_{0.0005}B_{0.003}Al_{0.002}Sr_{0.002}PO₄, or Mn_{0.65}Fe_{0.34}Mo_{0.003}Co_{0.003}Ni_{0.002}V_{0.0015}Ca_{0.0005}PO₄.

16. A method for preparing a phosphate material, **characterized in that,** the method comprising the following steps: 1) mixing a manganese iron oxide and an optional compound of an M element with phosphoric acid to obtain a reaction mixture; 2) grinding the reaction mixture and causing the reaction mixture to react to generate a phosphate to obtain a slurry containing the phosphate, wherein the particle size of the phosphate in the slurry is at most 100 nm; 3) separating the slurry to obtain phosphate particles; 4) drying and sintering the phosphate particles to obtain the phosphate material; wherein the M is one or more selected from the group consisting of Mg, Ti, V, Cr, Co, Ni, Zn, Ga, Al, Zr, Nb, Mo, Sn, Sb, Ca, Ba, Sr, B, Ru, Si, Te, Nb, Cu and Li.

17. The method for preparing a phosphate material according to claim 16, **characterized in that,** the particle size of the manganese iron oxide is 1-20 µm, preferably, the particle size of the manganese iron oxide is 2-7 µm; and/or, the phosphoric acid is present in the form of an aqueous solution of phosphoric acid, and the aqueous solution of phosphoric acid has a mass concentration of 10%-70%, preferably 20%-40%.

18. The method for preparing a phosphate material according to claim 16, **characterized in that,** in step 1), the mixing is carried out under mechanical stirring at a temperature of 20-40 °C; and/or, in step 2), the grinding is carried out in a sand mill at a temperature of 20-40 °C; and/or, in step 4), the drying is carried out at a temperature of 100-120 °C; and/or, in step 4), the sintering is carried out at a temperature of 300-400 °C; and/or, step 3) comprises filtering and washing the phosphate slurry.

19. The method for preparing a phosphate material according to claim 16, **characterized in that,** step 4) comprises: drying the phosphate particles to obtain a manganese iron phosphate monohydrate crystal or doped manganese iron phosphate monohydrate crystal with a particle size of at most 100 nm, and then sintering the manganese iron phosphate monohydrate crystal or the doped manganese iron phosphate monohydrate crystal to obtain the phosphate material.

20. The method for preparing a phosphate material according to claim 16, **characterized in that,** a ratio of the total molar quantity of the manganese iron oxide and the compound of the M element to the molar quantity of the phosphoric acid is 1:1 to 2.

21. The method for preparing a phosphate material according to claim 16, **characterized in that, the method** further comprising a step of pre-dispersing the manganese iron oxide in an aqueous solution of a dispersant, prior to step 1).

22. The method for preparing a phosphate material according to claim 21, **characterized in that,** the dispersant is one or more selected from the group consisting of polyvinyl pyrrolidone, polyethylene glycol and TC130 dispersant; and/or, the aqueous solution of the dispersant has a mass concentration of 0.01 %-5 %.

23. The method for preparing a phosphate material according to claim 16, **characterized in that, the method** further comprising a step of reacting phosphorus pentoxide with water to prepare the phosphoric acid, prior to step 1).

24. The method for preparing a phosphate material according to any one of claims 16 to 23, **characterized in that,** the compound of the M element is one or more selected from the group consisting of a compound of Mg, a compound of Ti, a compound of V, a compound of Co, a compound of Ni, a compound of Zn, a compound of Ga, a compound of Al, a compound of Zr, a compound of Nb, a compound of Mo, a compound of Sn, a compound of Sb, a compound of Ca, a compound of Ba, a compound of Sr, a compound of B, a compound of Ru, a compound of Si, a compound of Te, a compound of Nb, a compound of Cu, and a compound of Li.

25. The method for preparing a phosphate material according to any one of claims 16 to 23, **characterized in that,** the compound of the M element is one or more selected from the group consisting of an oxide, carbonate, oxalate, nitrate, sulfate, chloride and organic acid salt of the M element.

26. The method for preparing a phosphate material according to any one of claims 16 to 23, **characterized in that,** the compound of the M element is cobalt chloride; or a combination of magnesium oxide and boric acid, or a combination of molybdenum trioxide, niobium oxalate and boric acid; or a combination of cobalt acetate, ammonium metavanadate, nickel sulfate and boric acid; or magnesium acetate; or a combination of vanadyl oxalate VOC₂O₄and titanium chloride.

27. The method for preparing a phosphate material according to any one of claims 16 to 23, **characterized in that,** the compound of the M element is a combination of at least five compounds selected from the group consisting of a compound of Mg, a compound of Ti, a compound of V, a compound of Co, a compound of Ni, a compound of Zn, a compound of Ga, a compound of Al, a compound of Zr, a compound of Nb, a compound of Mo, a compound of Sn, a compound of Sb, a compound of Ca, a compound of Ba, a compound of Sr, a compound of B, a compound of Ru, a compound of Si, a compound of Te, a compound of Nb, a compound of Cu, and a compound of Li.

28. The method for preparing a phosphate material according to any one of claims 16 to 23, **characterized in that,** the compound of the M element is a combination of magnesium acetate, ammonium metavanadate, titanium oxide, cadmium oxide, and cobalt sulfate; or a combination of zinc sulfate, copper oxalate, cobalt acetate, magnesium nitrate, cobalt oxide, and n-butyl titanate; or a combination of zinc oxide, copper oxide, magnesium oxide, molybdenum oxide, and titanium dioxide; or a combination of magnesium oxide, ammonium metavanadate, titanium dioxide, chromium trioxide, and molybdenum oxide; or a combination of niobium oxalate, boron trioxide, cobalt acetate, ammonium metavanadate, and aluminum oxide; or a combination of cobalt acetate, ammonium metavanadate, nickel acetate, boric acid, and niobium oxalate; or a combination of cobalt chloride, gallium chloride, boric acid, aluminum trioxide, and strontium chloride; or a combination of molybdenum oxide, cobalt chloride, nickel chloride, vanadium oxalate, and calcium oxide.

29. A use of the manganese iron phosphate according to any one of claims 1 to 5 or the phosphate material according to any one of claims 6 to 15 or a phosphate material prepared by the method for preparing a phosphate material according to any one of claims 16 to 29 in preparation of a battery cathode material.

30. A manganese iron phosphate battery cathode material, **characterized in that,** the manganese iron phosphate battery cathode material is prepared by a high-temperature sintering reaction of raw materials comprising the manganese iron phosphate according to any one of claims 1 to 5 or the phosphate material according to any one of claims 6 to 15 or a phosphate material prepared by the method for preparing a phosphate material according to any one of claims 16 to 28, and a lithium source compound and an optional organic carbon source.

31. The manganese iron phosphate battery cathode material according to claim 30, **characterized in that,** the lithium source compound is one or more selected from the group consisting of lithium carbonate, lithium hydroxide, lithium chloride, lithium sulfate, lithium nitrate, lithium dihydrogen phosphate, lithium hydrogen phosphate and lithium acetate.

32. The manganese iron phosphate battery cathode material according to claim 30, **characterized in that,** the organic carbon source is one or more selected from the group consisting of glucose, sucrose, fructose, citric acid, polyethylene glycol, polyvinyl pyrrolidone, ethylenediaminetetraacetic acid and ascorbic acid.

33. A lithium-ion battery, comprising a cathode material, **characterized in that,** the cathode material comprises the manganese iron phosphate cathode material according to claim 30, 31 or 32.

34. The lithium-ion battery according to claim 33, **characterized in that,** the lithium-ion battery having a specific discharge capacity of 145 mAh/g or more at 0.1C, a specific discharge capacity of 135 mAh/g or more at 1C, and a capacity retention of 92% or more after 200 cycles of charge and discharge at a 1C.
